# EUROPÄISCHE PATENTSCHRIFT

(11) **EP 1 825 230 B1**
(45) Veröffentlichungstag und Bekanntmachung des Hinweises auf die Patenterteilung: **12.03.2014**
(21) Anmeldenummer: 05813345.5
(22) Anmeldetag: 29.11.2005
(51) Int. Cl.: G01F 1/84, G01H 3/12, G01H 13/00, G10K 11/22

(54) **MESSAUFNEHMER VOM VIBRATIONSTYP**
VIBRATORY MEASURING SENSOR
CAPTEUR DE MESURE DU TYPE A VIBRATIONS

(30) Priorität: 13.12.2004 DE 102004060115
(43) Veröffentlichungstag der Anmeldung: 29.08.2007
(73) Patentinhaber: Endress+Hauser Flowtec AG, 4153 Reinach (CH)
(72) Erfinder: SCHÜTZE, Christian, CH-4055 Basel (CH); ANKLIN-IMHOF, Martin, CH-4143 Dornach (CH)
(74) Vertreter: Andres, Angelika Maria
(86) Internationale Anmeldenummer: PCT/EP2005/056328
(87) Internationale Veröffentlichungsnummer: WO 2006/063932

(56) Entgegenhaltungen:
- EP-A- 1 248 084
- US-B1- 6 415 668

## Beschreibung

Die Erfindung betrifft einen Meßaufnehmer vom Vibrationstyp zum Messen eines Massendurchflusses und/oder einer Dichte und/oder einer Viskosität eines in einer Rohrleitung geführten strömungsfahigen Mediums, insb. eines Gases, einer Flüssigkeit, eines Pulvers oder eines anderen strömungsfähigen Stoffes.

In der Prozeßmeß- und Automatisierungstechnik werden für die Messung physikalischer Parameter, wie z.B. dem Massedurchfluß, der Dichte und/oder der Viskosität. eines in einer Rohrleitung strömenden Mediums oftmals solche In-Line-Metßgeräte verwendet, die mittels eines vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen.

Derartige, insb. als Coriolis-Massedurchflußmesser oder Coriolis-Massedurchfluß-/ Dichtemesser ausgehildete, Meßaufnehmer sind z.B. in der WO-A 04/099735, der WO-A 04/038341, WO-A 03/076879, der
WO-A 03/027616, der WO-A 03/021202der WO-A 01/33174, der
WO-A 00/57141, der WO-A 98/ 07 009, der US-B 68 07 866, der
US-B 67 11 958, der US-B 66 66 098, der US-B 63 08 580, der
US-A 60 92 429, der US-A 57 96 0.11, der US-A 53 01 557, der
US-A 48 76 898, der EP-A 553 939, der EP-A 1 001 254. der

EP-A 12 48 084, der EP-A 1 448 956 oder der EP-A 1. 421 349 ausführlich und detailliert beschrieben. Zum Führen des zumindest zeitweise strömenden Mediums umfassen die Meßaufnehmer jeweils mindestens ein an einem zumeist eher dickwandigen, insb. rohrförmigen und/oder balkenartigen, Tragzylinder oder in einem Tragrahmen entsprechend schwingfähig gehaltertes Aufnehmer-Rohr. Darüber hinaus weisen die vorgenanten Meßaufnehmer ein mit dem ersten Aufnehmer-Rohr zumindest über zwei, insb. aber vier Koppelelemente - auch Knotenplatten oder Koppler genannt - mechanisch gekoppeltes, ebenfalls zumindest zeitweise vibrierendes zweites Aufnehmer-Rohr auf, wobei wenigstens das erste Aufnehmer-Rohr als ein dem Führen von zu messendem Medium dienendes, mit der Rohrleitung kommunizierendes erstes Meßrohr ausgebildet ist. Zum Erzeugen oben genannter Reaktionskräfte, werden die beiden Aufnehmer-Rohre, angetrieben von einer zumeist elektro-dynamischen Erregeranordnung, im Betrieb vibrieren gelassen wird, wobei die beiden Aufnehmer-Rohre zumindest zeitweise Biegeschwingungen um eine zu einer Längsachse des Meß-aufnehmers im wesentlichen parallele gedachte Schwingungsachse ausführen. Zum Erfassen, insb. einlaßseitiger und auslaßseitiger, Vibrationen des Aufnehmer-Rohrs und zum Erzeugen wenigstens eines diese repräsentierenden Schwingungsmeßsignals weisen solche Meßaufnehmer ferner jeweils eine auf Bewegungen und insoweit auch auf mechanische Schwingungen des Aufnehmer-Rohrs reagierende Sensoranordnung auf.

Im Betrieb wird das vorbeschriebene, durch das wenigstens eine Aufnehmer-Rohr, das zumindest darin momentan geführte Medium sowie zumindest anteilig durch die Erreger- und die Sensoranordnung gebildete innere Schwingungssystems des Meßaufnehmers mittels der elektro-mechanischen Erregeranordnung zumindest zeitweise in einem Nutzschwingungsmode zu mechanischen Schwingungen auf wenigstens einer dominierenden Nutz-Schwingungsfrequenz angeregt. Diese Schwingungen im sogenannten Nutzschwingungsmode sind zumeist, insb. bei Verwendung des Meßaufnehmers als Coriolis-Massedurchfluß- und/oder Dichtemesser, zumindest anteilig als Lateral-Schwingungen ausgebildet. Als Nutz-Schwingungsfrequenz wird dabei üblicherweise eine natürliche momentane Resonanzfrequenz des inneren Schwingungssystems gewählt, die wiederum sowohl von Größe, Form und Material des Aufnehmer-Rohrs als auch von einer momentanen Dichte des Mediums abhängig ist; ggf. kann die Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist. Das von dem wenigstens einen Aufnehmer-Rohr sowie der Erreger- und der Sensoranordnung gemeinsam gebildete innere Schwingungssystem des Meßaufnehmers ist ferner üblicherweise von einem den Tragrahmen bzw. den Tragzylinder als integralen Bestandteil aufweisenden Aufnehmer-Gehäuse eingehaust, wobei letzteres über ein einlaßseitiges Ende und ein auslaßseitiges Ende mit der Rohrleitung mechanisch gekoppelt ist und ebenfalls eine Vielzahl von natürlichen Schwingungsmoden aufweist. Für Meßaufnehmer vom Vibrationstyp entsprechend geeignete Aufnehmer-Gehäuse sind beispielsweise in der WO-A 03/076879, der WO-A 03/021202, der WO-A 01/65213, der WO-A 00/57141, der US-B 67 76 052, der
US-B 67 11 958, der US-A 60 44 715, der US-A 53 01 557 oder der
EP-A 1 001. 254 beschrieben.

Die Entwicklung auf dem Gebiet der Meßaufnehmer vom Vibrationstyp hat inzwischen einen Stand erreicht, daß moderne Meßaufnehmer der beschriebenen Art praktisch für nahezu alle Anwendungen der Durchflußmeßtechnik einsetzbar sind und dort höchsten Anforderungen genügen können. So werden solche Meßaufnehmer in der Praxis für Massendurchflußraten von nur einigen wenigen g/h (Gramm pro Stunde) bis zu einigen t/h (Tonnen pro Stunde), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1 %, wobei eine untere Grenze des garantierten Meßbereichs durchaus bei etwa 1% des Meßbereichsendwerts liegen kann. Aufgrund der hohen Bandbreite ihrer Einsatzmöglichkeiten können Meßaufnehmer der beschriebenen Art je nach Anwendung zudem mit nominellen Nennweiten angeboten werden, die gemessen am Flansch zwischen 1 mm und 250 mm oder sogar darüber liegen.

Untersuchungen an Meßaufnehmern vom Vibrationstyp mit zwei zueinander parallelen gebogenen Aufnehmer-Rohren, wie sie z.B. in der US-B 67 11 958 oder der US-B 63 08 580, beschrieben sind, haben jedoch gezeigt, daß trotz eines weitgehend symmetrischen Aufbaus bezüglich einer zwischen den beiden gebogenen Mittel-Rohrsegmenten der Aufnehmerrohre verlaufenden gedachten Mittelebene des Meßaufnehmers, in erheblichem Maße im Rhythmus der Nutz-Schwingungsfrequenz wechselnde Imbalancen im Meßaufnehmer erzeugt und damit einhergehend Störschwingungen in die angeschlossene Rohrleitung ausgekoppelt werden können. Als besonders schädlich für die geforderte hohe Meßgenauigkeit haben sich dabei jene Störschwingungen erwiesen, die in Richtung jener - im folgenden als Hochachse bezeichneten - Trägheitshauptachse des Meßaufnehmers wirken, die in der vorgenannten gedachten Mittelebene des Meßaufnehmers liegt und im wesentlichen senkrecht zur Schwingungsachse verläuft. Zur Verringerung von solchen, insb. transversal zur Schwingungsachse ausgerichteten, Störschwingungen wird sowohl in der EP-A 12 48 084 als auch in der WO-A 04/099735 vorgeschlagen, jeweils an einem gebogenen zentralen Mittel-Rohrsegment jedes der beiden Aufnehmer-Rohre ein auslegerartiges Balance-Element anzubringen. Die Wirkung solcher Balance-Elemente besteht dabei im wesentlichen darin, solche Beschleunigungskräfte zu generieren, die den von den vibrierenden Aufnehmer-Rohren erzeugten, im obigen Sinne vertikal zur Schwingungsachse ausgerichteten Beschleunigungskräfte entsprechend entgegen gerichtet sind und diese somit teilweise kompensieren. Weitergehende Untersuchungen haben zudem gezeigt, daß bei Meßaufnehmern der beschriebenen Art, insb. mit V-förmig oder trapezförmig gebogenen Aufnehmer-Rohren und/oder mit Aufnehmer-Rohren deren Rohr-Durchmessern 80 mm oder mehr beträgt, neben solchen vornehmlich von der Beschleunigung bewegter Massen abhängigen Kräften in zunehmendern Maße auch solche Einspannkräfte zu signifikanten Inbalancen im Meßaufnehmer führen können, die in überwiegendem Maß von einer mit einer momentanen Auslenkung der Aufnehmer-Rohre einhergehenden unsymmetrischen Deformation des Aufnehmer-Gehäuses abhängig sind. US 6 415 668 offenbart einen Meßaufnehmer vom Vibrationstyp, der zwei einlaßseitig und zwei auslaßseitig die zwei vibrierenden Rohre verbindende Koppelelemente aufweist.

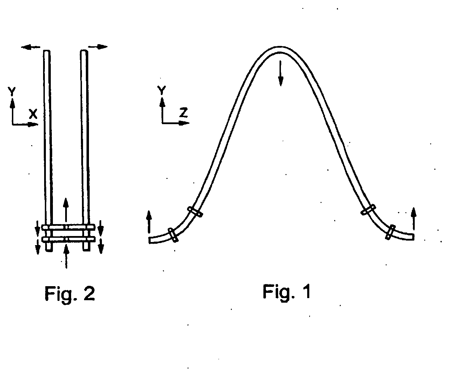

Fig. 1 und 2 zeigen zwei Prinzipskizzen zur Erläuterung der Schwingungsbewegung bei einem Meßaufnehmer der beschriebenen Art mit zwei gebogenen, zueinander parallel verlaufenden Aufnehmer-Rohren, die einlaß- bzw. auslaßseitig über jeweils zwei Koppelelemente miteinander mechanisch gekoppelt sind. Die Aufnehmer-Roher sind dabei schematisch in vereinfachter Form und an den Enden freigeschnitten, also ohne einspannendes Aufnehmer-Gehäuse, gezeigt und können insoweit an ihren Enden virtuell schwingen. Wie bereits erwähnt, schwingen die beiden Aufnehmer-Rohre Im Betrieb relativ zueinander, und zwar in der Weise, daß sie, wenn auch mit unterschiedlicher Amplitude, praktisch über ihre gesamte Länge lateral ausgelenkt werden (X-Richtung). Der überwiegende Anteil der Schwingungen und der damit einhergehenden Kräfte ist dabei sowohl senkrechte zur Schwingungsachse (Z-Richtung) als auch senkrecht zur erwähnten Hochachse (Y-Richtung) des Meßaufnehmers gerichtet, wobei zumindest für den Fall, daß beide Aufnehmer-Rohr gleichzeitig vom Medium durchströmt sind, der Anteil des einen Aufnehmer-Rohrs den entsprechenden Anteil des anderen Aufnehmer-Rohrs im wesentlich kompensiert. Ein geringerer Anteil der von den Schwingungen verursachten Kräfte wirkt auch in Richtung der Hochachse (Y-Richtung). Die Schwingungsbewegung der Aufnehmer-Rohre wird trotz der Koppelelemente bis zu den - hier freien - Enden übertragen, wobei sich auch die Koppelelemente geringfügig verformen (Fig. 2). Die Mitten der Koppelelemente bewegen sich dabei auch in Richtung der Hochachse, während die sich die "freien" Enden der Aufnehmer-Rohre entgegengesetzt in Richtung der Hochachse bewegen. Diese Bewegung der Enden der Aufnehmer-Rohre führt im eingebauten und fixierten Zustand umgekehrt zu Einspannkräften im einspannenden Aufnehmer-Gehäuse, beispielsweise in den allfällig angeschlossenen Versteilerstücken, und insoweit auch zu Deformationen des Aufnehmer-Gehäuses.

Eine Möglichkeit zur Reduzierung solcher unerwünschten, beispielsweise einen kalibrierten Nullpunkt des Meßaufnehmers variierenden, Einspannkräfte würde beispielsweise darin bestehen, eine den vorgenannten Deformationen des Aufnehmer-Gehäuses entgegenwirkende Steifigkeit des Aufnehmer-Gehäuses durch Erhöhung der Wandstärke entsprechend zu vergrößern. Allerdings besteht hierbei ein besonderes Problem darin, daß bei Meßaufnehmern großer Nennweite eine Einbaumasse ohnehin sehr hoch ist. Für Meßaufnehmer mit einer nominellen Nennweite von weit über 150 mm, einschließlich allfällig daran fixierter Flansche, kann eine Einbaumasse durchaus bei etwa 500 kg liegen. Insofern sind bei Meßaufnehmern großer Nennweite die Möglichkeiten, das Aufnehmer-Gehäuse durch erhöhte Materialstärken ausreichend zu versteifen, zumindest für die angestrebte Verwendung bewährter Materialien, insb. Edelstahl, als eher begrenzt anzusehen.

Ausgehend vom oben genannten Stand der Technik besteht daher eine Aufgabe der Erfindung darin, Meßaufnehmer vom Vibrationstyp anzugeben, die, insb. unter weitgehender Beibehaltung bereits etablierter und bewährter Bauformen, auch mit großen Nennweiten von über 150 mm eine möglichst hohe Meßgenauigkeit von 99,8% oder darüber und insoweit einen Meßfehler von kleiner 0,02% aufweisen.

Zur Lösung der Aufgabe besteht die Erfindung in einem Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, welcher Meßaufnehmer umfaßt:
- ein Aufnehmer-Gehäuse, das über ein einlaßseitiges Ende und ein auslaßseitiges Ende mit der Rohrleitung mechanisch gekoppelt ist,
- wenigstens ein im Aufnehmer-Gehäuse schwingfähig gehaltertes und zumindest zeitweise vibrierendes erstes Aufnehmer-Rohr und ein mit dem ersten Aufnehmer-Rohr mechanisch gekoppeltes, ebenfalls zumindest zeitweise vibrierendes zweites Aufnehmer-Rohr,
   -- wobei das erste Aufnehmer-Rohr und das zweite Aufnehmer-Rohr im Betrieb zumindest zeitweise Biegeschwingungen jeweils um eine zu einer Längsachse des Meßaufnehmers im wesentlichen parallele gedachte Schwingungsachse ausführen, und
   -- wobei wenigstens das erste Aufnehmer-Rohr als ein dem Führen von zu messendem Medium dienendes, mit der Rohrleitung kommunizierendes erstes Meßrohr ausgebildet ist,
- eine auf wenigstens eines der Aufnehmer-Rohre einwirkende elektro-mechanische, insb. elektro-dynamische, Erregeranordnung zum Erzeugen und/oder Aufrechterhalten von mechanischen Schwingungen des wenigstens einen Aufnehmer-Rohrs,
- eine auf Bewegungen zumindest des ersten Aufnehmer-Rohrs, insb. Biege-Schwingungen, reagierende Sensoranordnung zum Erzeugen wenigstens eines Schwingungen des ersten Aufnehmer-Rohrs repräsentierenden Schwingungsmeßsignals sowie
- wenigstens drei das erste und das zweite Aufnehmer-Rohr einlaßseitig miteinander verbindende, insb. plattenförmige, Koppelelemente sowie wenigstens drei das erste und das zweite Aufnehmer-Rohr auslaßseitig miteinander verbindende, insb. plattenförmige, Koppelelemente.

Zudem besteht die Erfindung darin, den vorgenannten Meßaufnehmer zum Messen eines strömungsfähigen Mediums zu verwenden, das in einer Rohrleitung geführt ist, die ein Kaliber von größer 150 mm, insb. von 250 mm oder darüber, aufwest und/oder zum Messen eines Massendurchflusses von einem durch eine Rohrleitung strömenden Medium, der zumindest zeitweise größer als 900 t/h ist, insb. zumindest zeitweise mehr als 1200 t/h beträgt.

Nach einer ersten Ausgestaltung des Meßaufnehmers der Erfindung schwingen die beiden Aufnehmer-Rohre im Betrieb zueinander im wesentlichen gegenphasig.

Nach einer zweiten Ausgestaltung des Meßaufnehmers der Erfindung weist jedes der beiden Aufnehmer-Rohre jeweils ein zumindest abschnittsweise, insb. im wesentlichen U-, V-förmig oder auch trapezförmig, gebogenes zentrales Mittel-Rohrsegment auf.

Nach einer dritten Ausgestaltung des Meßaufnehmers der Erfindung sind die cinlaßseitigen Koppelelemente und die auslaßseitigen Koppelelemente so an den beiden Aufnehmer-Rohren angeordnet und fixiert, daß solche von den vibrierenden Aufnehmer-Rohren innerhalb des Aufnehmer-Gehäuses erzeugte Einspannkräfte minimiert sind, die überwiegend in Richtung jener Trägheitshauptachse des Meß-aufnehmers wirken, die im wesentlichen senkrecht zur Längsachse verläuft und im wesentlichen in einer zwischen den beiden gebogenen Mittel-Rohrsegmenten der Aufnehmerrohre verlaufenden gedachten Mittelebene des Meßaufnehmers liegt.

Nach einer vierten Ausgestaltung des Meßaufnehmers der Erfindung weist jedes der beiden Aufnehmer-Rohre jeweils einlaßseitig ein gerades, zur der gedachten Schwingungsachse im wesentlichen parallel verlaufendes Einlaß-Rohrsegment auf, das jeweils über ein einlaßseitiges bogenförmiges Zwischen-Rohrsegment in das jeweilige Mittel-Rohrsegment mündet und wobei jedes der beiden Aufnehmer-Rohre jeweils auslaßseitig ein gerades, zur der gedachten Schwingungsachse im wesentlichen parallel verlaufendes Auslaß-Rohrsegment aufweist, das jeweils über ein bogenförmiges auslaßseitiges Zwischen-Rohrsegment in das jeweilige Mittel-Rohrsegment mündet.

Nach einer fünften Ausgestaltung des Meßaufnehmers der Erfindung sind zumindest ein erstes und ein zweites Koppelelement der die beiden Aufnehmer-Rohre einlaßseitig miteinander verbindenden Koppelelemente jeweils am einlaßseitigen Zwischen-Rohrsegment des ersten und des zweiten Aufnehmer-Rohrs fixiert sind und sind zumindest ein erstes und ein zweites Koppelelement der die beiden Aufnehmer-Rohre auslaßseitig miteinander verbindenden Koppelelemente jeweils am auslaßseitigen Zwischen-Rohrsegment des ersten und des zweiten Aufnehmer-Rohrs fixiert.

Nach einer sechsten Ausgestaltung des Meßaufnehmers der Erfindung ist zumindest ein drittes Koppelelement der die beiden Aufnehmer-Rohre einlaßseitig miteinander verbindenden Koppelelemente jeweils am Einlaß-Rohrsegment des ersten und des zweiten Aufnehmer-Rohrs fixiert und ist zumindest ein drittes Koppelelement der die beiden Aufnehmer-Rohre auslaßseitig miteinander verbindenden Koppelelemente jeweils am Auslaß-Rohrsegment des ersten und des zweiten Aufnehmer-Rohrs fixiert.

Nach einer siebenten Ausgestaltung des Meßaufnehmers der Erfindung verläuft das erste Aufnehmer-Rohr im wesentlichen parallel zum zweiten Aufnehmer-Rohr.

Nach einer achten Ausgestaltung des Meßaufnehmers der Erfindung ist das erste Aufnehmer-Rohr im wesentlichen identisch zum zweiten Aufnehmer-Rohr ausgebildet.

Nach einer neunten Ausgestaltung des Meßaufnehmers der Erfindung umfaßt dieser weiters ein das erste und das zweite Aufnehmer-Rohr einlaßseitig miteinander verbindendes erstes Verteilerstück sowie ein das erste und das zweite Aufnehmer-Rohr auslaßseitig miteinander verbindendes zweites Verteilerstück, wobei das zweite Aufnehmer-Rohr als ein ebenfalls dem Führen von zu messendem Medium dienendes, ebenfalls mit der Rohrleitung kommunizierendes zweites Meßrohr des Meßaufnehmers ausgebildet ist. Nach einer Weiterbildung dieser Ausgestaltung der Erfindung weist jedes der beiden Verteilerstücke eine Masse von mehr als 10 kg, insb. von mehr als 20 kg, auf.

Nach einer zehnten Ausgestaltung des Meßaufnehmers der Erfindung weist das Aufnehmer-Gehäuse ein, insb. aus Stahl bestehendes, Tragelement auf, mit dem das wenigstens eine Aufnehmer-Rohr einlaßseitig und auslaßseitig mechanisch verbunden ist. Nach einer Weiterbildung dieser Ausgestaltung der Erfindung ist das Tragelement als seitlich zumindest teilweise offener, insb. rohrförmiger, Tragzylinder ausgebildet, der mit dem wenigstens einen Aufnehmer-Rohr so verbunden ist, daß das dessen wenigstens eines gebogenes Rohrsegment seitlich aus dem Tragzylinder herausragt. Nach einer anderen Ausgestaltung dieser Weiterbildung der Erfindung weist das Tragelement eine Masse von wenigstens 70 kg, insb. von mehr als 140 kg, und/oder eine Länge von wenigstens 1000 mm, insb. von mehr als 1200 mm, auf.

Nach einer elften Ausgestaltung des Meßaufnehmers der Erfindung bestehen jedes der Aufnehmer-Rohre sowie das Aufnehmer-Gehäuse zumindest anteilig aus Stahl, insb. Edelstahl.

Nach einer zwölften Ausgestaltung des Meßaufnehmers der Erfindung weist jedes der Aufnehmer-Rohre eine Masse von wenigstens 10 kg, insb. von größer als 25 kg, auf.

Nach einer dreizehnten Ausgestaltung des Meßaufnehmers der Erfindung weist jedes der Aufnehmer-Rohre einen Innen-Durchmesser auf, der wenigstens 80 mm beträgt, insb. größer als 100 mm ist.

Nach einer vierzehnten Ausgestaltung des Meßaufnehmers der Erfindung weist jedes der Aufnehmer-Rohre einen Querschnitt auf, dessen Flächenträgheitsmoment größer als 2 • 10⁴ mm³, insb. größer als
4 • 10⁶ mm⁴, ist.

Nach einer fünfzehnten Ausgestaltung des Meßaufnehmers der Erfindung weist jedes der Aufnehmer-Rohre einen Querschnitt auf, dessen Widerstandsmoment gegen Biegung größer als 10⁶ mm⁴, insb. größer als 2 • 10⁶ mm⁴, ist.

Nach einer sechzehnten Ausgestaltung des Meßaufnehmers der Erfindung weist jedes der Aufnehmer-Rohre eine gestreckte Länge auf, die wenigstens 1000 mm beträgt, insb. größer als 1500 mm ist.

Nach einer siebzehnten Ausgestaltung des Meßaufnehmers der Erfindung ist jedes der Mittel-Rohrsegmente der beiden Aufnehmer-Rohre im wesentlichen V-förmig ausgebildet und weist jedes der Mittel-Rohrsegmente der beiden Aufnehmer-Rohre einen Scheitelbogen mit einem Öffnungswinkel auf, der kleiner als 150°, insb. kleiner als 120°, ist.

Nach einer achtzehnten Ausgestaltung des Meßaufnehmers der Erfindung ist durch die beiden Aufnehmer-Rohre, das zumindest darin momentan geführte Medium sowie zumindest anteilig durch die Erreger- und die Sensoranordnung ein inneres Schwingungssystems des Meßaufnehmers gebildet, und führt das innere Schwingungssystem, angetrieben von der Erregeranordnung, im Betrieb des Meßaufnehmers zumindest zeitweise, insb. als Lateral-Schwingungen ausgebildete, mechanische Schwingungen mit wenigstens einer Nutz-Schwingungsfrequenz aus, die sowohl von Größe, Form und Material des Aufnehmer-Rohrs als auch von einer momentanen Dichte des Mediums abhängig ist, und die im Betrieb des Meßaufnehmers innerhalb eines vorgegebenen, eine untere und eine obere Grenzfrequenz aufweisenden Nutz-Frequenzbandes veränderlich ist. Nach einer Weiterbildung dieser Ausgestaltung der Erfindung beträgt eine Gesamt-Masse des inneren Schwingungssystems wenigstens 70 kg, insb. im Betrieb zumindest zeitweise mehr als 90 kg.

Nach einer neunzehnten Ausgestaltung des Meßaufnehmers der Erfindung sind durch das Aufnehmer-Gehäuse und zumindest durch die Verteilerstücke ein äußeres Schwingungssystem des Meßaufnehmers sowie durch die beiden Aufnehmer-Rohre, das zumindest darin momentan geführte Medium sowie zumindest anteilig durch die Erreger- und die Sensoranordnung ein inneres Schwingungssystems des Meßaufnehmers gebildet, und führt das innere Schwingungssystem, angetrieben von der Erregeranordnung, im Betrieb des Meßaufnehmers zumindest zeitweise, insb. als Lateral-Schwingungen ausgebildete, mechanische Schwingungen mit wenigstens einer Nutz-Schwingungsfrequenz aus, die sowohl von Größe, Form und Material des Aufnehmer-Rohrs als auch von einer momentanen Dichte des Mediums abhängig ist, und die im Betrieb des Meßaufnehmers innerhalb eines vorgegebenen, eine untere und eine obere Grenzfrequenz aufweisenden Nutz-Frequenzbandes veränderlich ist. Nach einer Weiterbildung dieser Ausgestaltung der Erfindung beträgt eine Gesamt-Masse des äußeren Schwingungssystems wenigstens 200 kg, insb. mehr als 300 kg. Nach einer anderen Weiterbildung dieser Ausgestaltung der Erfindung ist ein Massen-verhältnis einer Gesamt-Masse des äußeren Schwingungssystems zu einer Gesamt-Masse des inneren Schwingungssystems im Betrieb zumindest zeitweise, insb. aber dauerhaft, kleiner als 3, insb. kleiner als 2,5.

Nach einer zwanzigsten Ausgestaltung des Meßaufnehmers der Erfindung beträgt ein Einbau-Masse-zu-Nennweite-Verhältnis einer Einbau-Masse des gesamten Meßaufnehmers zu einer nominellen Nennweite des Meßaufnehmers, die einem Kaliber der Rohrleitung, in deren Verlauf der Meßaufnehmer einzusetzen ist, entspricht, wenigstens 1,5, insb. mehr als 2.

Nach einer einundzwanzigsten Ausgestaltung des Meßaufnehmers der Erfindung ist die Einbau-Masse des gesamten Meßaufnehmers größer als 200 kg, insb. größer als 400 kg.

Ein Grundgedanke der Erfindung besteht darin, mittels der wenigstens sechs Koppelelemente allfällig in den Endbereichen der vibrierenden Aufnehmer-Rohre, insb. im Bereich der Zwischen-Segmente, erzeugte, insb. in Richtung der Hochachse des Meßaufnehmers wirkende, Störschwingungen zu unterdrücken. Die Erfindung basiert dabei auf der überraschenden Erkenntnis, daß durch Verwendung von wenigstens 2 x 3 Koppelelemente und deren Anordnung jeweils im Bereich der Zwischen-Segmente im Vergleich zu herkömmlichen Meßaufnehmers mit 2 x 2 Koppelelemente eine Wirkrichtung im besonderen von schwingungsbedingten Deformationen im Aufnehmer-Gehäuse bzw. in den Verteilerstücken herrührenden Einspannkräfte zumindest in eine für die Messung eher unschädliche Richtung gedreht und dabei zumindest die ansonsten in Richtung der Hochachse wirkenden Störschwingungen auch erheblich minimiert werden können. Insofern wirken die einlaßseitig an den Aufnehmer-Rohren angebrachten wenigstens drei Koppelelemente und die auslaßseitig an den Aufnehmer-Rohren angebrachten wenigstens drei Koppelelemente praktisch jeweils als mechanisches Polarisationsfilter, das so ausgebildet ist, daß es zumindest in Richtung der Hochachse des Meßaufnehmers wirkende Störschwingungen unterdrückt oder sogar eliminiert.

Ein Vorteil der Erfindung besteht u.a. darin, daß im Vergleich zu herkömmlichen Meßaufnehmern mit vier Koppelelemente bereits durch die Verwendung zweier zusätzlicher Koppelelemente und insoweit im Vergleich zu herkömmlichen Meß-aufnehmern ohne großen Mehraufwand eine weitgehende, bestenfalls sogar nahezu vollständige Kompensation der am meisten störenden, insb. der in Richtung der Hochachse des Meßaufnehmers wirkenden, Einspannkräfte realisiert werden kann. Insofern ist ein weiterer Vorteil der Erfindung auch darin zu sehen, daß dadurch eine Möglichkeit geschaffen wird, Meßaufnehmer vom Vibrationstyp auch mit großer nomineller Nennweite von über 150 mm, insb. mit einer Nennweite von größer 200 mm, einerseits wirtschaftlich sinnvoll und anderseits auch noch mit einer handhabbaren Einbaumasse realisiert werden können. Ein weiterer Vorteil der Erfindung besteht darin, daß dabei auch bereits etablierte und bewährte Bauformen, insb. auch hinsichtlich der Aufnehmer-Rohre, weitgehend beibehalten werden können.

Der erfindungsgemäße Meßaufnehmer ist daher besonders auch zum Messen von strömungsfähigen Medien geeignet, die in einer Rohrleitung mit einem Kaliber von größer 150 mm, insb. von 250 mm oder darüber, geführt sind. Zudem ist der Meßaufnehmer zum Messen auch solcher Massendurchflüsse geeignet, die zumindest zeitweise größer als 900 t/h sind, insb. zumindest zeitweise mehr als 1200 t/h betragen, wie sie z.B. bei Anwendungen zur Messung von Erdöl, Erdgas oder anderen petrochemischen Stoffen auftreten können.

Die Erfindung wird nun anhand von Ausführungsbeispielen sowie den Figuren der Zeichnung näher erläutert. Funktionsgleiche Teile sind in den einzelnen Figuren mit denselben Bezugszeichen versehen, die jedoch in nachfolgenden Figuren nur dann wiederholt sind, wenn es sinnvoll erscheint.

Fig. 1, 2 zeigen Prinzipskizzen zur Erläuterung der Schwingungsbewegung bei herkömmlichen Meßaufnehmern in verschiedenen Seitenansichten,

Fig. 3a, b zeigen ein, beispielsweise als Coriolis-Massedurchfluß-/Dichte- und/oder als Viskositäts-Meßgerät, dienendes In-Line-Meßgerät in verschieden Seitenansichten, und

Fign. 4 bis 6 zeigen Einzelheiten eines für ein In-Line-Meßgerät nach Fig. 3a, b geeigneten Meßaufnehmers vom Vibrationstyp in verschiedenen, teilweise geschnitten Seitenansichten.

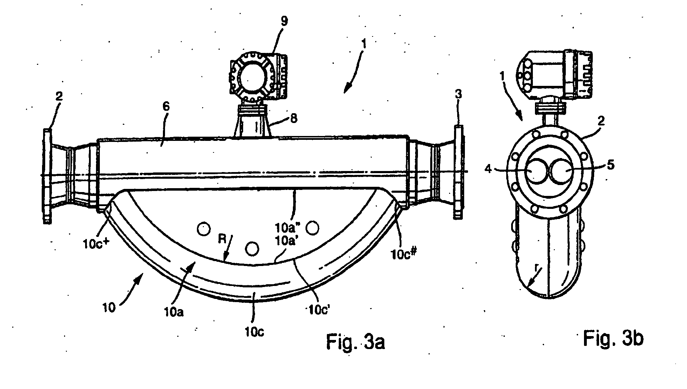

In den Fig. 3a, b ist ein, insb. als Coriolis-Massedurchfluß- und/oder Dichte-Meßgerät ausgebildetes, In-Line-Meßgerät 1 dargestellt, das beispielsweise dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert Xₘ abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das In-Line-Meßgerät 1 ggf. auch dazu verwendet werden, eine Dichte ρ und/ oder eine Viskosität η des Mediums zu messen. Im besonderen ist der Meßaufnehmer dafür vorgesehen, solche Medien, wie z.B. Erdöl, Erdgas oder andere petrochemische Stoffe, zu messen, die in einer Rohrleitung mit einem Kaliber von größer als 150 mm, insb. einem Kaliber von 250 mm oder darüber, strömen und/oder die zumindest zeitweise einen Massendurchfluß von größer als 900 t/h, insb. von größer 1200 t/h, aufweisen.

Zum Messen des Mediums umfaßt das In-Line-Meßgerät 1 einen im Betrieb vom Medium entsprechend durchströmten Meßaufnehmer 10 vom Vibrationstyp sowie eine mit dem Meßaufnehmer 10 elektrisch verbundene - hier nicht im einzelnen, sondern lediglich als schematisch als Schaltungsblock dargestellte - Meßgerät-Elektronik 20. In vorteilhafter Weise ist die Meßgerät-Elektronik 20 so ausgelegt, daß sie im Betrieb des In-Line-Meßgeräts 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem Feldbussystem, Meß- und/oder andere Betriebsdaten austauschen kann. Des weiteren ist die Meßgerät-Elektronik so ausgelegt, daß sie von einer externen Energieversorgung, beispielsweise auch über das vorgenannte Feldbussystem, gespeist werden kann. Für den Fall, daß das In-line-Meßgerät für eine Ankopplung an ein Feldbus- oder ein anderes Kommunikationssystem vorgesehen ist, weist die, insb. programmierbare, Meßgerät-Elektronik 20 zu dem eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf.

In den Fig. 3a, b sowie 4 bis 6 ist in unterschiedlichen Darstellungsarten ein Ausführungsbeispiel des, insb. als Coriolis-Massedurchfluß-, als Dichte- und/oder als Viskositäts-Aufnehmer dienenden, Meßaufnehmers 1 gezeigt. Wie bereits erwähnt, dient der Meßaufnehmer 1 dazu, in einem hindurchströmenden Medium solche mechanische Reaktionskräfte, insb. vom Massendurchfluß abhängige Corioliskräfte, von der Mediumsdichte abhängige Trägheitskräfte und/oder von der Mediumsviskosität abhängige Reibungskräfte, zu erzeugen, die meßbar, also sensorisch erfaßbar, auf den Meßaufnehmer zurückwirken. Abgeleitet von diesen das Medium beschreibenden Reaktionskräften können mittels in der Meßgerät-Elektronik entsprechend implementierten Auswerte-Verfahren in der dem Fachmann bekannten Weise z.B. der Massendurchfluß, die Dichte und/oder die Viskosität des Mediums gemessen werden. Der Meßaufnehmer 1 ist im Betrieb in den Verlauf einer von einem zu messenden, insb. pulvrigen, flüssigen, gasförmigen oder dampfförmigen, Medium durchströmten - aus Gründen der Übersichtlichkeit jedoch nicht dargestellten - Rohrleitung über Flansche 2, 3, einzusetzen. Anstatt mittels Flanschen kann der Meßaufnehmer 1 an die erwähnte Rohrleitung auch durch andere bekannte Mittel angeschlossen werden, wie z.B. mittels Triclamp-Anschlüssen oder Schraubverbindungen.

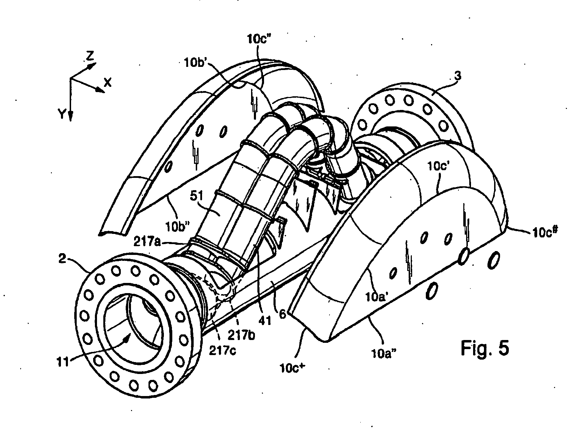

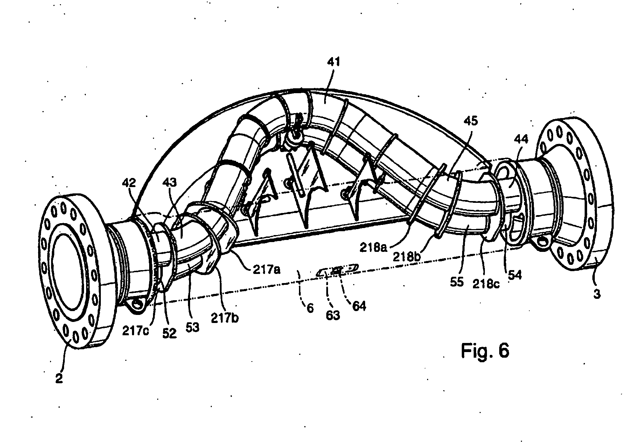

Zum Führen wenigstens eines Teilvolumens des zu messenden Mediums umfaßt der Meßaufnehmer wenigstens ein in einem Aufnehmer-Gehäuse 10 schwingfähig gehaltertes, als Meßrohr dienendes erstes Aufnehmer-Rohr 4, das im Betrieb mit der Rohrleitung kommuniziert und, angetrieben von einer elektro-mechanischen Erregeranordnung 60, zumindest zeitweise in wenigstens einem für die Ermittlung der physikalischen Meßgröße geeigneten Schwingungsmode vibrieren gelassen wird. Neben dem, insb. einstückig ausgebildeten, Aufnehmer-Rohr 4 ist ferner, wie auch in den Fig. 5 und 6 gezeigt, ein zum ersten Aufnehmer-Rohr 4 im wesentlichen identisches, insb. ebenfalls mit der Rohrleitung kommunizierendes und insoweit als zweites Meßrohr des Meßaufnehmers dienendes, zweites Aufnehmer-Rohr 5 im Meßaufnehmer vorgesehen, das im Betrieb ebenfalls mechanische Schwingungen ausführt. Die Schwingungen zumindest des ersten Aufnehmer-Rohrs werden von einer entsprechend auf dessen Bewegungen, insb. dessen Biege-Schwingungen, reagierenden Sensoranordnung erfaßt und in ein diese Schwingungen entsprechend repräsentierendes Schwingungs-meßsignal s_{vb} umgewandelt. Insoweit führt also praktisch das gesamte innere Schwingungssystems des Meßaufnehmers 1, das durch die beiden Aufnehmer-Rohre 4, 5 das zumindest darin momentan geführte Medium sowie zumindest anteilig durch die Erreger- und die Sensoranordnung 60, 70 gebildet ist, im Betrieb des Meßaufnehmers 1 zumindest zeitweise mechanische Schwingungen mit wenigstens einer Nutz-Schwingungsfrequenz Fₙ aus, wobei die mechanischen Schwingungen zumindest zeitweise und/oder zumindest anteilig als Lateral-Schwingungen, insb. als Biege-Schwingungen, ausgebildet sind. Die Nutz-Schwingungsfrequenz Fₙ ist dabei in dem Fachmann bekannter Weise sowohl von Größe, Form und Material der beiden Aufnehmer-Rohr 4, 5 als auch im besonderen von einer momentanen Dichte des Mediums abhängig, und insoweit im Betrieb des Meßaufnehmers innerhalb eines vorgegebenen, eine untere und eine obere Grenzfrequenz aufweisenden Nu tz-Frequenzbandes ΔFₙ veränderlich. Im Betrieb des Meßaufnehmers ist die momentane Nutz-Schwingungsfrequenz Fₙ des inneren Schwingungssystems in vorteilhafter Weise so geregelt und so eingestellt, daß sie im wesentlichen einer momentanen natürlichen Eigenfrequenz des inneren Schwingungssystems entspricht.

Die beiden, insb. zumindest abschnittsweise zueinander parallel verlaufenden, Aufnehmer-Rohre können, wie in den Fig. 5 und 6 angedeutet und beispielsweise auch in der US-B 67 11 958, der US-A 57 96 01.1, der US-A 53 01 557 gezeigt, mittels entsprechender Verteilerstücke 11, 12 jeweils einlaßseitig und auslaßseitig miteinander zu im Betrieb parallel durchströmten Strömungspfaden verbunden sein; sie können aber auch, wie z.B. in der US-A 60 44 715 gezeigt, unter Bildung hintereinander liegender Strömungspfade seriell miteinander verbunden sein. Es ist aber auch möglich, wie beispielsweise auch in der US-B 66 66 098 oder der

US-A 55 49 009 vorgeschlagen, lediglich eines der beiden Aufnehmer-Rohre als dem Führen von Medium dienendes Meßrohr und das andere als vom zu messenden Medium nicht durchströmtes, der Verringerung von intrinsischen Imbalancen im Meßaufnehmer dienendes Blindrohr zu verwenden. Gemäß einer vorteilhaften Ausgestaltung der Erfindung weist jedes der beiden Aufnehmer-Rohre 4, 5 wenigstens ein in zumindest einer Ebene zumindest abschnittsweise gebogenes zentrales Mittel-Rohrsegment 41, 51 auf. Die Aufnehmer-Rohre 4, 5 können dabei beispielsweise, wie auch in der

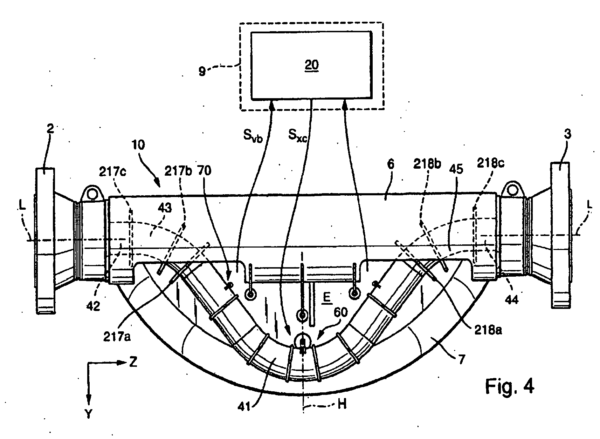

US-B 67 76 052 gezeigt, eine ausgeprägte U-Form aufweisen oder, wie auch in der US-B 68 02 224 oder der US-B 67 11 958 vorgeschlagen und in den Fig. 4 - 6 gezeigt, im wesentlichen V-förmig ausgebildet sein. Des weiteren können die Aufnehmer-Rohre aber auch, wie z.B. in der US-A 57 96 011 beschrieben, nur sehr geringfügig oder, wie z.B. in der WO-A 01/65213, der US-B 63 08 580, der US-A 60 92 429, der US-A 60 44 715 gezeigt, eher rechteck- oder trapezartig ausgebogen sein. Als Material für das Aufnehmer-Rohr eignen sich im besonderen Stahl, insb. Edelstahl, Titan, Zirkonium oder Tantal. Darüber hinaus kann als Material für die Aufnehmer-Rohre aber auch praktisch jeder andere dafür üblicherweise verwendete oder zumindest geeignete Werkstoff dienen.

Beim gezeigten Ausführungsbeispiel werden zumindest die Mittel-Rohrsegmente 41, 51 der beiden Aufnehmer-Rohre 4, 5 zumindest teilweise im Betrieb von der daran zumindest anteilig fixierten elektro-mechanischen Erregeranordnung 60 zu auslegerartigen Vibrationen angeregt, bei denen sie aus der oben erwähnten Ebene lateral ausgelenkt und zueinander im wesentlichen gegenphasig schwingen gelassen werden. Dabei führen das erste Aufnehmer-Rohr und das zweite Aufnehmer-Rohr im Betrieb zumindest zeitweise, Biegeschwingungen um eine zu einer Längsachse L des Meßaufnehmers im wesentlichen parallele gedachte Schwingungsachse aus. Anders gesagt, werden zumindest die Mittel-Rohrsegmente 41, 51 in einem Biegeschwingungsmode nach der Art einseitig eingespannter Ausleger oder Zinken einer Stimmgabel schwingen gelassen. Nach einer weiteren Ausgestaltung der Erfindung ist jedes der beiden zentralen Mittel-Rohrsegmente jeweils im wesentlichen V-förmig oder auch trapezförmig gebogen. Nach einer Weiterbildung dieser Ausgestaltung der Erfindung umfaßt jedes der beiden Aufnehmer-Rohre 4, 5 ferner jeweils einlaßseitig ein gerades, zur der gedachten Schwingungsachse im wesentlichen parallel verlaufendes Einlaß-Rohrsegment, das jeweils über ein einlaßseitiges bogenförmiges Zwischen-Rohrsegment in das jeweilige Mittel-Rohrsegment mündet. Darüber hinaus weist jedes der beiden Aufnehmer-Rohre 4, 5 jeweils auslaßseitig ein gerades, zur der gedachten Schwingungsachse im wesentlichen parallel verlaufendes Auslaß-Rohrsegment auf, das jeweils über ein bogenförmiges auslaßseitiges Zwischen-Rohrsegment in das jeweilige Mittel-Rohrsegment mündet. Nach einer anderen Weiterbildung dieser Ausgestaltung der Erfindung weist jedes der Mittel-Rohrsegmente einen Scheitelbogen mit einem Öffnungswinkel auf, der kleiner als 150°, insb. kleiner als 120°, ist.

Wie bereits erwähnt ist er Meßaufnehmer 1 im besonderen für Messungen auch hoher Massendurchflüsse in einer Rohrleitung von großem Kaliber vorgesehen. Aufgrund dessen ist nach einer weiteren Ausgestaltung des Meßaufnehmers 1 vorgesehen, daß zumindest das als Meßrohr dienende Aufnehmer-Rohr 4 einen Innen-Durchmesser aufweist, der wenigstens

80 mm beträgt. Im besonderen ist zumindest das Aufnehmer-Rohr 4 so ausgebildet, das dessen Innen- Durchmesser größer als 100 mm, insb. auch größer als 110 mm, ist. Nach einer weiteren Ausgestaltung der Erfindung weist das Aufnehmer-Rohr 4 zudem einen Querschnitt auf, dessen Flächenträgheitsmoment größer als 2 • 10⁴ mm³, insb. größer als

4 • 10⁶ mm⁴, ist und/oder dessen Widerstandsmoment gegen Biegung größer als 10⁶ mm⁴, insb. größer als 2 • 10⁶ mm⁴, ist. Ferner ist das als Meßrohr dienende Aufnehmer-Rohr 4 gemäß einer anderen Ausgestaltung der Erfindung so ausgelegt, daß es eine gestreckte Länge von wenigstens

1000 mm, insb. von größer als 1500 mm, aufweist. Dementsprechend ergibt sich zumindest für den Fall, daß das Aufnehmer-Rohr 4 aus Stahl besteht, für letzteres zumindest bei einer Wandstärke von etwas über 1 mm eine Masse von wenigstens 10 kg. Nach einer weiteren Ausgestaltung der Erfindung ist zumindest das Aufnehmer-Rohr 4 allerdings so bemessen, daß es infolge einer vergleichsweise großen Wandstärke von etwa 5 mm und/oder einer vergleichsweise großen gestreckten Länge von etwa

2000 mm eine Masse von mehr als 25 kg aufweist. Es sei an dieser Stelle noch erwähnt, daß das zweite Aufnehmer-Rohr 5 zumindest für den Fall, das ebenfalls als Meßrohr dient, im wesentlich parallel zum Aufnehmer-Rohr 4 angeordnet und zum ersten Aufnehmer-Rohr 4 im wesentlichen identisch ausgebildet, insofern also sowohl dieselben physikalischen als auch dieselben geometrischen Eigenschaften aufweist ist. In Anbetracht dessen, daß in Konsequenz aus den besonderen Dimensionen jedes der Aufnehmer-Rohre 4, 5 durchaus weit über 10 kg wiegen und dabei, wie aus den obigen Maßangaben ohne weiteres ersichtlich, ein Fassungsvermögen von 101 oder mehr haben kann, kann das dann die beiden Aufnehmer-Rohre 4, 5 umfassende innere Schwingungssystem zumindest bei hindurchströmendem Medium mit hoher Dichte eine Gesamt-Masse von weit über 50 kg erreichen. Besonders bei der Verwendung von Aufnehmer-Rohren mit vergleichsweise großem Innen-Durchmesser, großer Wandstärke und großer gestreckter Länge kann die Masse des inneren Schwingungssystem somit ohne weiters aber auch größer als 70 kg oder zumindest mit hindurchströmendem Medium mehr als 90 kg betragen.

Neben dem Aufnehmer-Gehäuse 10 und den darin gehalterten Aufnehmer-Rohren 4, 5 umfaßt der Meßaufnehmer 1 eine auf das wenigstens eine Aufnehmer-Rohr 4 einwirkende elektro-mechanische, insb. elektro-dynamische, Erregeranordnung 60 zum Erzeugen und/oder Aufrechterhalten von mechanischen Schwingungen. Des weiteren ist im Meßaufnehmer eine auf mechanische Schwingungen, beispielsweise Biege-Schwingungen, des Aufnehmer-Rohrs 4 reagierende Sensoranordnung 70 zum Erzeugen wenigstens eines Schwingungen des Aufnehmer-Rohrs 4 repräsentierenden Schwingungsmeßsignals s_{vb} vorgesehen. Zumindest die beiden Aufnehmer-Rohre 4, 5 sowie daran zusätzlich fixierte Komponenten, wie z.B. Teil der Erregeranordnung 60 und der Sensoranordnung 70 bilden somit praktisch ein inneres Schwingungssystem des Meßaufnehmers.

Zum Erzeugen und/oder Aufrechterhalten von mechanischen Schwingungen des wenigstens einen Aufnehmer-Rohrs weist die Erregeranordnung 60 im gezeigten Ausführungsbeispiel zumindest einen jeweils im Bereich der Scheitelbögen, insb. etwa jeweils mittig, an den beiden Aufnehmer-Rohren 4, 5 angeordneten Schwingungserreger auf. Bei dem Schwingungserreger kann es sich beispielsweise um einen solchen vom elektro-dynamischen Typ, also einen mittels einer am Aufnehmer-Rohr 5 fixierten Magnetspule 62 und einen darin eintauchenden, am anderen Aufnehmer-Rohr 4 entsprechend fixierten Anker 61 realisierten Schwingungserreger, handeln.

Zum Erfassen von Vibrationen wenigstens des einen Aufnehmer-Rohrs 4 und zum Erzeugen des wenigstens einen Schwingungen des Aufnehmer-Rohrs 4 repräsentierenden Schwingungsmeßsignals s_{vb} ist ferner, wie bereits erwähnt, eine Sensoranordnung vorgesehen, mittels der in der für derartige Meßaufnehmer üblichen Weise, insb. einlaß- und auslaßseitige, Vibrationen des Rohrsegments 41 signalisiert und einer elektronischen Weiterverarbeitung zugeführt werden können. Im gezeigten Ausführungsbeispiel weist die Sensoranordnung dafür einen einlaßseitig an den Aufnehmer-Rohren 4, 5 angeordneten ersten Schwingungssensor sowie einen auslaßseitig an den Aufnehmer-Rohren 4, 5 angeordneten, insb. zum ersten Schwingungssensor im wesentlichen identischen oder baugleichen, zweiten Schwingungssensor auf. Bei den Schwingungssensoren kann es sich ebenfalls um solche vom elektro-dynamischen Typ, also jeweils mittels einer am Aufnehmer-Rohr 5 fixierten Magnetspule 72, 82 und einen darin eintauchenden, am anderen Aufnehmer-Rohr 4 entsprechend fixierten Anker 71, 81 realisierten Schwingungssensor, handeln. Darüber hinaus können als Schwingungssensoren auch andere dem Fachmann bekannte, beispielsweise optoelektronische, Schwingungssensoren verwendet werden. Zum Ermitteln der wenigstens einen physikalische Meßgröße anhand des wenigstens einen Schwingungsmeßsignals s _{vb} sind die Erregeranordnung 60 und die Sensoranordnung 70 ferner, wie bei derartigen Meßaufnehmern üblich, in geeigneter Weise mit einer in der Meßgerät-Elektronik 20 entsprechend vorgesehenen der Meß- und Betriebsschaltung gekoppelt, beispielsweise galvanisch und/oder opto-elektronisch verbunden. Die Meß- und Betriebsschaltung wiederum erzeugt einerseits ein die Erregeranordnung 60 entsprechend treibendes, beispielsweise hinsichtlich eines Erregerstromes und/oder einer Erregerspannung geregeltes, Erregersignal s_{xc}. Andererseits empfängt die Meß- und Betriebsschaltung das wenigstens eine Schwingungsmeßsignal s_{vb} der Sensoranordnung 70 und generiert daraus gewünschte Meßwerte, die beispielsweise einen Massedurchfluß, eine Dichte und/oder eine Viskosität des zu messenden Mediums repräsentieren können und die ggf. vor Ort angezeigt oder auch ggf. übergeordnet weiterverarbeitet werden. Die Meßgerät-Elektronik 20 einschließlich der Meß- und Betriebsschaltung kann beispielsweise in einem separaten Elektronik-Gehäuse 9 untergebracht sein, das vom Meßaufnehmer entfernt angeordnet oder, unter Bildung eines einzigen Kompaktgeräts, direkt am Meßaufnehmer 1, beispielsweise von außen am Aufnehmer-Gehäuse 10, fixiert ist. Bei dem hier gezeigten Ausführungsbeispiel ist daher am Aufnehmer-Gehäuse ferner ein dem Haltern des Elektronik-Gehäuses 9 dienendes halsartiges Übergangsstücks 8 angebracht. In den Fig. 4 bis 6 sind das Übergangsstück 8 und das Elektronik-Gehäuse 9 allerdings weggelassen; lediglich in Fig. 6 ist eine in eine Wand des Aufnehmer-Gehäuses 10 eingelassene Ansatzfläche 63 für das Übergangsstück 8 zu sehen. In der Ansatzfläche 63 ist eine elektrische Durchführung 64 angeordnet, mittels der elektrische Verbindungen zur Erregeranordnung 60 und zur Sensoranordnung 70 sowie gegebenenfalls weiteren elektrischen Komponenten, wie z.B. im Meßaufnehmer 1 ggf. vorgesehenen Druck- und/oder Temperatursensoren, herstellbar sind.

Die Aufnehmer-Rohre 4, 5 des Meßaufnehmers wie auch die daran jeweils angebrachte Erreger- und Sensoranordnung sind, wie aus der Zusammenschau der Fign. 3a, b und 5 ohne weiteres ersichtlich und wie bei derartigen Meßaufnehmern auch üblich, vom Aufnehmer-Gehäuse 10 praktisch vollständig umhüllt. Das Aufnehmer-Gehäuse 10 dient insoweit also nicht nur als Halterung des Aufnehmer-Rohr 4, 5 sondern darüber hinaus auch dazu, die innen liegenden Bauteile des Meßaufnehmers 1, wie beispielsweise die Erreger- und die Sensoranordnung und allfällig darüber hinaus innerhalb des Aufnehmer-Gehäuse plazierte Komponenten des Meßaufnehmers vor äußeren Umwelteinflüssen, wie z.B. Staub oder Spritzwasser, zu schützen. Überdies kann das Aufnehmer-Gehäuse 10 ferner auch so ausgeführt und so bemessen sein, daß es bei allfälligen Schäden am Aufnehmer-Rohr 4, z.B. durch Rißbildung oder Bersten, ausströmendes Medium bis zu einem geforderten maximalen Überdruck im Inneren des Aufnehmer-Gehäuses möglichst vollständig zurückzuhalten kann. Als Material für das Aufnehmer-Gehäuse, insb. auch die Gehäusekappe 7, können z.B. Stähle wie Baustahl oder rostfreier Stahl, oder auch andere geeignete hochfeste Werkstoffe verwendet werden. Nach einer weiteren Ausgestaltung des Meßaufnehmers bestehen das, insb. zumindest abschnittsweise gebogene, Aufnehmer-Rohr4 und das Aufnehmer-Gehäuse aus jeweils dem gleichen Material, insb. Stahl oder Edelstahl, oder zumindest aus einander ähnlichen Materialien, insb. verschiedenen Stahlsorten. Ferner ist vorgesehen, die Flansche, wie auch in Fig. 3a, b dargestellt und wie bei derartigen Meßaufnehmer durchaus üblich, als integralen Bestandteil des Aufnehmer-Gehäuses auszubilden, um so eine möglichst kurze Einbaulänge bei möglichst hoher Stabilität des Meßaufnehmers zu erreichen; gleichermaßen können auch die ggf. vorgesehenen Verteilerstücke 11, 12 direkt in das Aufnehmer-Gehäuse integriert sein.

Bei dem hier gezeigten Ausführungsbeispiel umfaßt das Aufnehmer-Gehäuse 10 ein - hier als seitlich zumindest teilweise offenen Tragzylinder dargestelltes - Tragelement 6, das, wie in den Fign. 4 bis 6 dargestellt, mit dem wenigstens einen Aufnehmer-Rohr einlaßseitig und auslaßseitig mechanisch so verbunden ist, daß das wenigstens eine gebogene Rohrsegment 41 seitlich herausragt. Ferner weist das Aufnehmer-Gehäuse eine von den gebogenen Mittel-Rohrsegmenten der Aufnehmer-Rohre 4, 5 beabstandet angeordnete und am Tragelement 6, insb. dauerhaft und/oder mediumsdicht, fixierte Gehäusekappe 7. Bei dem hier dargestellten Ausführungsbeispiel ist zumindest das Aufnehmer-Rohr 4 im hier rohrförmigen Tragelement 6 einlaß- und auslaßseitig so gehaltert, daß das schwingfähige Mittel-Rohrsegment 41, durch zwei Ausnehmungen 61, 62 des Tragelements 6 verlaufend, seitwärts aus diesem heraus- und somit in die ebenfalls am Tragelement 6 fixierte Gehäusekappe 7 hineinragt. Es sei hierbei noch erwähnt, das anstelle des hier eher rohrförmig dargestellten Tragelements 6 auch ein ggf. massiver Tragzylinder mit einem anderen geeigneten Querschnitt verwendet werden kann, beispielsweise auch ein eher balkenförmig ausgebildetes Tragelement.

Je nach dem, welche Form und gestreckte Länge für die Aufnehmer-Rohre 4, 5 tatsächlich gewählt wird, weist das hier im wesentlichen zylindrische Tragelement eine zur gestreckten Länge der Aufnehmer-Rohre 4, 5 im wesentlichen gleiche oder eine etwas kürzere Länge auf. Demgemäß und im Hinblick auf die oben erwähnten Abmessungen der zueinander im wesentlichen identischen Aufnehmer-Rohre 4, 5 hat das Tragelement nach einer Ausgestaltung des Meßaufnehmers eine Länge von ebenfalls mindestens etwa 1000 mm. Vorzugsweise ist das zylindrische Tragelement aber mit einer Länge von über 1200 mm realisiert. Ferner weist das Tragelement, insb. für den Fall, daß es aus Stahl besteht, eine Masse von wenigstens 70 kg auf. Nach einer weiteren Ausgestaltung des Meßaufnehmers ist das Tragelement allerdings so ausgebildet und so bemessen, daß seine Masse mehr als 140 kg beträgt. Dementsprechend ist der vorgeschlagene Meßaufnehmer so ausgeführt und so dimensioniert, daß ein Massenverhältnis einer Gesamt-Masse eines vom Aufnehmer-Gehäuse und den ggf. vorgesehenen Verteilerstücken gebildeten äußeren Schwingungssystems zu einer Gesamt-Masse des inneren Schwingungssystems ohne weiteres kleiner als 3, insb. kleiner gleich 2, sein kann.

Die dem Einhausen des Rohrsegments 41 dienende Gehäusekappe 7 umfaßt, wie in Fig. 3a, b schematisch dargestellt, ein rinnenförmiges Kappensegment 10c sowie ein im wesentlichen ebenes erstes seitliches Gehäuse-Segment 10a und ein zu diesem im wesentlichen spiegelsymmetrisches zweites seitliches Gehäuse-Segment 10b. Die Form des Kappensegments 10c entspricht, wie aus der Zusammenschau von Fig. 3a und 3b ohne weiteres ersichtlich, im wesentlichen der einer toroidalen Schale. Dementsprechend weist das Kappensegment 10c einen im wesentlichen kreisbogenförmigen, bevorzugt halbkreisförmigen, Querschnitt von vorgebbarem Radius r auf und, zumindest virtuell, einen im wesentlichen kreisbogenförmigen ersten Segmentrand 10c' mit einem im Vergleich zum Radius r wesentlich größeren Radius R sowie einem zum ersten Segmentrand im wesentlichen identisch geformten zweiten Segmentrand 10c". Falls erforderlich, kann sowohl der Querschnitt als auch der Segmentrand nicht ideal-kreisförmig, also leicht elliptisch geformt sein. Wie aus der Zusammenschau der Fign. 3a, b und 4 ohne weiteres ersichtlich, sind die seitlichen Gehäuse-Segmente 10a, 10b jeweils über einen kreisbogenförmigen ersten Segmentrand 10a' bzw. 10b' mit dem ersten bzw. zweiten Segmentrand 10c', 10c" des Kappensegments 10c verbunden, und zwar so, daß die seitlichen Gehäuse-Segmente 10a, 10b jeweils in einer Tangentialebene des Kappensegments 10c und somit zu einer an den zugehörigen Segmentrand 10ca bzw. 10cb anlegbaren Tangente im wesentlichen fluchtend ausgerichtet sind. Anders gesagt, zwischen dem Kappen- und dem Gehäuse-Segment 10c, 10a bzw. dem Kappen- Gehäuse-Segment 10c, 10b ist jeweils ein weitgehend stetiger, also möglichst glatter Übergang geschaffen, in dem bei zulässigem innerem Überdruck möglichst keine oder nur sehr geringe Biegespannungen erzeugt werden. Außerdem ist die Gehäusekappe 7 über einen dritten Segmentrand 10c⁺ und einen vierten Segmentrand 10c^{#} des Kappensegments 10c sowie über jeweils einen zweiten Segmentrand 10a", 10b" des ersten und zweiten seitlichen Gehäuse-Segments 10a bzw. 10b am Tragelement 6 fixiert, und zwar so, daß das Kappensegment bzw. die Gehäuse-Segmente 10c, 10a, 10b im Betrieb vom wenigstens einen vibrierenden Rohrsegment 41 beabstandet bleiben. Zur Herstellung der Gehäusekappe 7 können die Segmente 10c, 10a, 10b z.B. jeweils einzeln vorgefertigt und nachträglich zusammengefügt, insb. miteinander verschweißt werden. In vorteilhafter Weise kann bei der Herstellung der Gehäusekappe 7 z.B. auch das in der bereits erwähnten WO-A 03/021202 beschriebene Verfahren zum Herstellen einer als Gehäusekappe 7 verwendbaren Metallkappe angewendet werden, bei dem diese durch Verschweißen zweier im wesentlichen identisch geformter, insb. aus einem tellerförmigen Halbzeug ausgeschnittener, Kappenhälften mit einer, insb. vierteltorusförmigen, Randwulst gebildet wird. Ferner kann die Gehäusekappe 7 z.B. auch aus einem Metallblech von entsprechender Dicke tiefgezogen werden.

Nach einer Ausgestaltung des Meßaufnehmers ist die Gehäuse-Kappe 7 so dimensioniert, daß sie, insb. bei Verwendung von Stahl als Gehäuse-Material, eine Masse von wenigstens 10 kg, vornehmlich jedoch von mehr als 20 kg aufweist. In Anbetracht dessen, daß das Tragelement durchaus eine Masse von 70 kg oder darüber aufweisen kann, ergibt sich somit für das Aufnehmer-Gehäuse eine Masse von wenigstens 80 kg, insb. aber von mehr als 160 kg. Allerdings ist für die gesamte Masse des äußeren Schwingungssystem für den oben erwähnten Fall das Flansche und/oder Verteilerstücke im Meßaufnehmer vorgesehen und diese insoweit auch dem äußeren Schwingungssystem zugehörig sind, eine entsprechend höhere Masse zu veranschlagen und bei der Abstimmung des äußeren auf das innere Schwingungssystem entsprechend mit zu berücksichtigen. Zumindest insoweit kann also die Masse des gesamten äußeren Schwingungssystems ohne weiteres auch 200 kg oder erheblich darüber betragen. Besonders bei Verwendung von Aufnehmer-Rohren mit einem Innen-Durchmesser von über 100 mm ist für das äußere Schwingungssystem eine Masse von weit über 300 kg zu veranschlagen. Im hier gezeigten Ausführungsbeispiel des Meßaufnehmers 1 sind, wie in Fig. 4 und 6 schematisch dargestellt, einlaßseitig und auslaßseitig am Tragelement 6 jeweils eine Transport-Öse fixiert, die dazu dienen, definierte Anschlagpunkte für allfällige Einbau-Hilfsmittel, wie z.B. entsprechende Anschlagseile oder -gurte von Hebezeugen, zu schaffen und somit eine Beschädigung des ggf. über 500 kg schweren des Meßaufnehmers, beispielsweise infolge unsachgemäßen Transports und/oder ungeeigneter Wahl der entsprechenden Anschlagpunkte, besser vermeiden zu können. Zur Minimierung von seitens des äußeren Schwingungssystems, insb. seitens des Aufnehmer-Gehäuses, entwickelten Störschwingungen können darüber hinaus entsprechende Stütz-Elemente am Aufnehmer-Gehäuse fixiert sein, wie sie z.B. in der eigenen, nicht vorveröffentlichen deutschen Patentanmeldung DE102004053883.2 beschrieben sind.

Zum Einstellen von mechanischen Resonanzfrequenzen des inneren Schwingungssystems sowie zur Minimierung von durch die vibrierenden Aufnehmer-Rohren einlaßseitig oder auslaßseitig im Aufnehmer-Gehäuse verursachten mechanische Spannungen und/oder Vibrationen sind die beiden Aufnehmer-Rohre 4, 5 einlaßseitig mittels wenigstens dreier Koppelelemente 217a, 217b, 217c sowie auslaßseitig mittels wenigstens dreier Koppelelement 218a, 218b, 218c miteinander mechanisch verbunden.

Nach einer Ausgestaltung der Erfindung sind die einlaßseitigen, insb. plattenförmig ausgebildeten, Koppelelemente 217a, 217b, 217c sowie die auslaßseitigen, insb. plattenförmig ausgebildeten, Koppelelemente 218a, 218b, 218c so an den beiden Aufnehmer-Rohren angeordnet und fixiert, daß zumindest solche von den vibrierenden Aufnehmer-Rohren 4, 5 innerhalb des Aufnehmer-Gehäuses erzeugte Einspannkräfte minimiert sind, die überwiegend in Richtung jener Trägheitshauptachse H des Meßaufnehmers wirken, die im wesentlichen senkrecht zur Schwingungsachse verläuft und im wesentlichen in einer zwischen den beiden gebogenen Mittel-Rohrsegmenten 41, 51 der Aufnehmerrohre 4, 5 verlaufenden gedachten Mittelebene E des Meßaufnehmers liegt, also in Richtung der eingangs bereits erwähnten Hochachse des Meßaufnehmers. Die sechs Koppelelemente 217a, 217b, 217c, 218a, 218b, 218c sind dabei, wie auch aus Fig. 4 ohne weiteres ersichtlich und bei Meßaufnehmern der beschriebenen Art üblich, so angeordnete und ausgerichtet, daß eine bezüglich der Hochachse H wie auch bezüglich der erwähnten Mittelebene existierende Symmetrie des Meßaufnehmers gewahrt bleibt.

Es hat sich hierbei überraschender Weise gezeigt, daß, sei es durch deren Dimensionierung und/oder deren Positionierung auf den beiden Aufnehmer-Rohren 4, 5, mittels der am nahesten zur Mitte der Aufnehmer-Rohre angeordneten Koppelelemente 217a, 218a nach wie vor in überwiegenden Maß die Nutz-Schwingungsfrequenz F des n inneren Schwingungssystems beeinflusst werden kann, während mittels der am weitesten von der Mitte der Aufnehmer-Rohre entfernten Koppelelemente 217c, 218c überwiegend senkrecht zur Hochachse H (X-Richtung) wirkende Einspannkräfte und mittels der jeweils mittleren der einlaßseitigen drei und der auslaßseitigen drei Koppelelemente - hier also den Koppelelementen 217b, 218b - überwiegend in Richtung der Hochachse (Y-Richtung) wirkende Einspannkräfte optimiert werden können. Insofern können für konkrete Meßaufnehmer die optimalen Positionen der wenigstens sechs Koppelelemente 217a, 217b, 217c, 218a, 218b, 218c nach Vorgabe des gewünschten Nutz-Frequenzbandes ΔFₙ für das innere Schwingungssystem mit sehr geringem Aufwand experimentell und/oder mittels computergestützten Berechnungen, insb. auch Simulationen, aufgefunden werden.

Im Ergebnis auch solcher Untersuchungen sind nach einer weiteren Ausgestaltung der Erfindung zumindest ein erstes und ein zweites Koppelelement 217a, 217b der die beiden Aufnehmer-Rohre 4, 5 einlaßseitig miteinander verbindenden Koppelelemente 217a, 217b, 217c jeweils am einlaßseitigen Zwischen-Rohrsegment 43, 53 des ersten und des zweiten Aufnehmer-Rohrs 4, 5 fixiert. Gleichermaßen sind bei dieser Ausgestaltung der Erfindung zumindest auch ein erstes und ein zweites Koppelelement 218a, 218b der die beiden Aufnehmer-Rohre 4, 5 auslaßseitig miteinander verbindenden Koppelelemente 218a, 218b, 218c jeweils am auslaßseitigen Zwischen-Rohrsegment 45, 55 des ersten und des zweiten Aufnehmer-Rohrs 4, 5 fixiert. Nach einer anderen Ausgestaltung der Erfindung ist ferner zumindest ein drittes Koppelelement 217c der die beiden Aufnehmer-Rohre 4, 5 einlaßseitig miteinander verbindenden Koppelelemente 217a, 217b, 217c jeweils am Einlaß-Rohrsegment 42, 52 des ersten und des zweiten Aufnehmer-Rohrs fixiert und ist zumindest ein drittes Koppelelement 218c der die beiden Aufnehmer-Rohre 4, 5 auslaßseitig miteinander verbindenden Koppelelemente 218a, 218b, 218c jeweils am Auslaß-Rohrsegment 44, 54 des ersten und des zweiten Aufnehmer-Rohrs 4, 5 fixiert.

## Patentansprüche

1. Meßaufnehmer vom Vibrationstyp zum Messen eines Massendurchflusses und/oder einer Dichte und/oder einer Viskosität eines in einer Rohrleitung geführten strömungsfähigen Mediums, insb. eines Gases, einer Flüssigkeit, eines Pulvers oder eines anderen strömungsfähigen Stoffes, welcher Meßaufnehmer umfaßt:
- ein Aufnehmer-Gehäuse (10), das über ein einlaßseitiges Ende und ein auslaßseitiges Ende mit der Rohrleitung mechanisch gekoppelt ist,
- wenigstens ein im Aufnehmer-Gehäuse (10) schwingfähig gehaltertes und zumindest zeitweise vibrierendes erstes Aufnehmer-Rohr (4) und ein mit dem ersten Aufnehmer-Rohr (4) mechanisch gekoppeltes, ebenfalls zumindest zeitweise vibrierendes zweites Aufnehmer-Rohr (5).
--wobei das erste Aufnehmer-Rohr (4) und das zweite Aufnehmer-Rohr (5) im Betrieb zumindest zeitweise Biegeschwingungen jeweils um eine zu einer Längsachse (L) des Meßaufnehmers im wesentlichen parallele gedachte Schwingungsachse ausführen, und
--wobei wenigstens das erste Aufnehmer-Rohr (4) als ein dem Führen von zu messendem Medium dienendes, mit der Rohrleitung kommunizierendes erstes Meßrohr ausgebildet ist,
- eine auf wenigstens eines der Aufnehmer-Rohre (4, 5) einwirkende elektro-mechanische, insb. elektro-dynamische, Erregeranordnung (60) zum Erzeugen und/oder Aufrechterhalten von mechanischen Schwingungen des wenigstens einen Aufnehmer-Rohrs (4, 5),
- eine auf Bewegungen zumindest des ersten Aufnehmer-Rohrs (4), insb. Biege-Schwingungen, reagierende Sensoranordnung zum Erzeugen wenigstens eines Schwingungen des ersten Aufnehmer-Rohrs (4) repräsentierenden Schwingungsmeßsignals (s_{vb}) sowie
- wenigstens drei das erste und das zweite Aufnehmer-Rohr (4, 5) einlaßseitig miteinander verbindende Koppelelement (217a, 217b, 217c) sowie wenigstens drei das erste und das zweite Aufnehmer-Rohr (4, 5) auslaßseitig miteinander verbindende Koppelelemente (218a, 218b, 218c).

2. Meßaufnehmer nach dem vorherigen Anspruch, wobei die beiden Aufnehmer-Rohre (4, 5) im Betrieb zueinander im wesentlichen gegenphasig schwingen.

3. Meßaufnehmer nach einem der vorherigen Ansprüche, wobei jedes der beiden Aufnehmer-Rohre (4) jeweils ein zumindest abschnittsweise, insb. im wesentlichen U-, V-förmig oder auch trapezförmig, gebogenes zentrales Mittel-Rohrsegment (41, 51) aufweist.

4. Meßaufnehmer nach Anspruch 3, wobei die einlaßseitigen Koppelelemente (217a, 217b, 217c) und die auslaßseitigen Koppelelemente (218a, 218b, 218c) so an den beiden Aufnehmer-Rohren (4, 5) angeordnet und fixiert sind, daß solche von den vibrierenden Aufnehmer-Rohren (4, 5) innerhalb des Aufnehmer-Gehäuses erzeugte Einspannkräfte minimiert sind, die überwiegend in Richtung jener Trägheitshauptachse (H) des Meßaufnehmers wirken, die im wesentlichen senkrecht zur Längsachse (L) verläuft und im wesentlichen in einer zwischen den beiden gebogenen Mittel-Rohrsegmenten (41, 51) der Aufnehmerrohre (4, 5) verlaufenden gedachten Mittelebene des Meßaufnehmers liegt.

5. Meßaufnehmer nach einem der Ansprüche 3 oder 4, wobei jedes der beiden Aufnehmer-Rohre (45) jeweils einlaßseitig ein gerades, zur der gedachten Schwingungsachse im wesentlichen parallel verlaufendes Einlaß-Rohrsegment (42, 52) aufweist, das jeweils über ein einlaßseitiges bogenförmiges Zwischen-Rohrsegment (43, 53) in das jeweilige Mittel-Rohrsegment (41, 51) mündet und wobei jedes der beiden Aufnehmer-Rohre (4, 5) jeweils auslaßseitig ein gerades, zur der gedachten Schwingungsachse im wesentlichen parallel verlaufendes Auslaß-Rohrsegment (44, 54) aufweist, das jeweils über ein bogenförmiges auslaßseitiges Zwischen-Rohrsegment (45, 55) in das jeweilige Mittel-Rohrsegment (41, 51) mündet.

6. Meßaufnehmer nach Anspruch 5, wobei zumindest ein erstes und ein zweites Koppelelement (217a, 217b) der die beiden Aufnehmer-Rohre (4, 5) einlaßseitig miteinander verbindenden Koppelelemente (217a, 217b, 217c) jeweils am einlaßseitigen Zwischen-Rohrsegment (43, 53) des ersten und des zweiten Aufnehmer-Rohrs (4, 5) fixiert sind und wobei zumindest ein erstes und ein zweites Koppelelement (218a, 218b) der die beiden Aufnehmer-Rohre (4, 5) auslaßseitig miteinander verbindenden Koppelelemente (218a, 218b, 218c) jeweils am auslaßseitigen Zwischen-Rohrsegment (45, 55) des ersten und des zweiten Aufnehmer-Rohrs (4, 5) fixiert sind.

7. Meßaufnehmer nach Anspruch 6, wobei zumindest ein drittes Koppelelement (217c) der die beiden Aufnehmer-Rohre (4, 5) einlaßseitig miteinander verbindenden Koppelelemente (217a, 217b, 217c) jeweils am Einlaß-Rohrsegment (42, 52) des ersten und des zweiten Aufnehmer-Rohrs (4, 5) fixiert ist und wobei zumindest ein drittes Koppelelement (218c) der die beiden Aufnehmer-Rohre (4, 5) auslaßseitig miteinander verbindenden Koppelelemente (218a, 218b, 218c) jeweils am Auslaß-Rohrsegment (44, 54) des ersten und des zweiten Aufnehmer-Rohrs (4, 5) fixiert ist.

8. Meßaufnehmer nach einem der vorherigen Ansprüche, wobei das erste Aufnehmer-Rohr (4) im wesentlichen parallel zum zweiten Aufnehmer-Rohr (5) verläuft.

9. Meßaufnehmer nach einem der vorherigen Ansprüche, wobei das erste Aufnehmer-Rohr (4) im wesentlichen identisch zum zweiten Aufnehmer-Rohr (5) ausgebildet ist.

10. Meßaufnehmer nach einem der vorherigen Ansprüche, der weiters ein das erste und das zweite Aufnehmer-Rohr (4, 5) einlaßseitig miteinander verbindendes erstes Verteilerstück (11) sowie ein das erste und das zweite Aufnehmer-Rohr (4, 5) auslaßseitig miteinander verbindendes zweites Verteilerstück (12) umfaßt, wobei das zweite Aufnehmer-Rohr als ein ebenfalls dem Führen von zu messendem Medium dienendes, ebenfalls mit der Rohrleitung kommunizierendes zweites Meßrohr des Meßaufnehmers ausgebildet ist.

11. Meßaufnehmer nach dem vorherigen Anspruch, wobei jedes der beiden Verteilerstücke (11, 12) eine Masse von mehr als 10 kg, insb. von mehr als 20 kg, aufweist.

12. Meßaufnehmer nach einem der vorherigen Ansprüche, wobei das Aufnehmer-Gehäuse (10) ein, insb. aus Stahl bestehendes, Tragelement (6) aufweist, mit dem das wenigstens eine Aufnehmer-Rohr (4) einlaßseitig und auslaßseitig mechanisch verbunden ist.

13. Meßaufnehmer nach dem vorherigen Anspruch, wobei das Tragelement (6) als seitlich zumindest teilweise offener, insb. rohrförmiger, Tragzylinder ausgebildet ist, der mit dem wenigstens einen Aufnehmer-Rohr (4) so verbunden ist, daß das wenigstens eine gebogene Rohrsegment (41) seitlich aus dem Tragzylinder herausragt.

14. Meßaufnehmer nach dem vorherigen Anspruch, wobei das Tragelement (6) eine Masse von wenigstens 70 kg, insb. von mehr als 140 kg, und/oder eine Länge von wenigstens 1000 mm, insb. von mehr als 1200 mm, aufweist.

15. Meßaufnehmer nach einem der vorherigen Ansprüche, wobei jedes der Aufnehmer-Rohre (4, 5) und das Aufnehmer-Gehäuse (10) zumindest anteilig aus Stahl, insb. Edelstahl, bestehen.

16. Meßaufnehmer nach einem der vorherigen Ansprüche, wobei jedes der Aufnehmer-Rohre (4, 5) eine Masse von wenigstens 10 kg, insb. von größer als 25 kg, aufweist.

17. Meßaufnehmer nach einem der vorherigen Ansprüche, wobei jedes der Aufnehmer-Rohre (4, 5) einen Innen-Durchmesser aufweist, der wenigstens 80 mm beträgt, insb. größer als 100 mm ist.

18. Meßaufnehmer nach einem der vorherigen Ansprüche, wobei jedes der Aufnehmer-Rohre (4, 5) einen Querschnitt aufweist, dessen Flächenträgheitsmoment größer als 2 • 10⁴ mm³, insb. größer als 4 • 10⁶ mm⁴, ist.

19. Meßaufnehmer nach einem der vorherigen Ansprüche, wobei jedes der Aufnehmer-Rohre (4, 5) einen Querschnitt aufweist, dessen Widerstandsmoment gegen Biegung größer als 10⁶ mm⁴, insb. größer als 2 • 10⁶ mm⁴, ist.

20. Meßaufnehmer nach einem der vorherigen Ansprüche, wobei jedes der Aufnehmer-Rohre (4, 5) eine gestreckte Länge aufweist, die wenigstens 1000 mm beträgt, insb. größer als 1500 mm ist.

21. Meßaufnehmer nach einem der Ansprüche 3 bis 20, wobei jedes der Mittel-Rohrsegmente (41, 51) der beiden Aufnehmer-Rohre (45) im wesentlichen V-förmig ausgebildet ist und wobei jedes der Mittel-Rohrsegmente der beiden Aufnehmer-Rohre (45) einen Scheitelbogen mit einem Öffnungswinkel aufweist, der kleiner als 150°, insb. kleiner als 120°, ist.

22. Meßaufnehmer nach einem der vorherigen Ansprüche, wobei durch die beiden Aufnehmer-Rohre (4, 5), das zumindest darin momentan geführte Medium sowie zumindest anteilig durch die Erreger- und die Sensoranordnung (60, 70) ein inneres Schwingungssystems des Meßaufnehmers gebildet ist, und wobei das innere Schwingungssystem, angetrieben von der Erregeranordnung (60), im Betrieb des Meßaufnehmers zumindest zeitweise, insb. als Lateral-Schwingungen ausgebildete, mechanische Schwingungen mit wenigstens einer Nutz-Schwingungsfrequenz (Fₙ) ausführt, die sowohl von Größe, Form und Material des Aufnehmer-Rohrs (4) als auch von einer momentanen Dichte des Mediums abhängig ist, und die im Betrieb des Meßaufnehmers innerhalb eines vorgegebenen, eine untere und eine obere Grenzfrequenz aufweisenden Nutz-Frequenzbandes (ΔFₙ) veränderlich ist.

23. Meßaufnehmer nach Anspruch 22, wobei eine Gesamt-Masse des inneren Schwingungssystems wenigstens 70 kg beträgt, insb. im Betrieb zumindest zeitweise größer als 90 kg ist

24. Meßaufnehmer nach einem der Ansprüche 10 bis 21, wobei durch das Aufnehmer-Gehäuse und zumindest durch die Verteilerstücke ein äußeres Schwingungssystem des Meßaufnehmers sowie durch die beiden Aufnehmer-Rohre (4, 5), das zumindest darin momentan geführte Medium sowie zumindest anteilig durch die Erreger- und die Sensoranordnung (60, 70) ein inneres Schwingungssystems des Meßaufnehmers gebildet sind, und wobei das innere Schwingungssystem, angetrieben von der Erregeranordnung (60), im Betrieb des Meßaufnehmers zumindest zeitweise, insb. als Lateral-Schwingungen ausgebildete, mechanische Schwingungen mit wenigstens einer Nutz-Schwingungsfrequenz (Fₙ) ausführt, die sowohl von Größe, Form und Material des Aufnehmer-Rohrs (4) als auch von einer momentanen Dichte des Mediums abhängig ist, und die im Betrieb des Meßaufnehmers innerhalb eines vorgegebenen, eine untere und eine obere Grenzfrequenz aufweisenden Nutz-Frequenzbandes (ΔFₙ) veränderlich ist.

25. Meßaufnehmer nach Anspruch 24, wobei eine Gesamt-Masse des äußeren Schwingungssystems wenigstens 200 kg beträgt, insb. größer als 300 kg ist

26. Meßaufnehmer nach Anspruch 24 oder 25, wobei ein Massenverhältnis einer Gesamt-Masse des äußeren Schwingungssystems zu einer Gesamt-Masse des inneren Schwingungssystems im Betrieb zumindest zeitweise kleiner als 3, insb. kleiner als 2,5, ist.

27. Meßaufnehmer nach dem vorherigen Anspruch, wobei das Massenverhältnis der Gesamt-Masse des äußeren Schwingungssystems zu der Gesamt-Masse des inneren Schwingungssystems dauerhaft kleiner als 3 ist.

28. Meßaufnehmer nach einem der vorherigen Ansprüche, wobei ein Einbau-Masse-zu-Nennweite-Verhältnis einer Einbau-Masse des gesamten Meßaufnehmers zu einer nominellen Nennweite des Meßaufnehmers, die einem Kaliber der Rohrleitung, in deren Verlauf der Meßaufnehmer einzusetzen ist, entspricht, wenigstens 1,5 beträgt, insb. größer als 2 ist.

29. Meßaufnehmer nach einem der vorherigen Ansprüche, wobei die Einbau-Masse des gesamten Meßaufnehmers größer als 200 kg, insb. größer als 400 kg, ist.

30. Verwendung des Meßaufnehmers nach einem der vorherigen Ansprüche zum Messen eines Massendurchflusses und/oder einer Dichte und/oder einer Viskosität eines strömungsfähigen Mediums, das in einer Rohrleitung geführt ist, die ein Kaliber von größer 150 mm, insb. von 250 mm oder darüber, aufweist und/oder zum Messen eines Massendurchflusses von einem durch eine Rohrleitung strömenden Medium, der zumindest zeitweise größer als 900 t/h ist, insb. zumindest zeitweise mehr als 1200 t/h beträgt.

## Claims

1. Vibronic sensor designed to measure a mass flow and/or a density and/or a viscosity of a medium, which is capable of flowing and is conducted in a pipe, particularly a gas , a liquid, a powder or another material capable of flowing, said sensor comprising:
- a sensor housing (10) that is mechanically coupled to the pipe via an end at the inlet side and an end at the outlet side,
- at least a first sensor tube (4), supported in a way that permits vibration, and vibrating at least at times, and a second sensor tube (5) which is coupled mechanically to the first sensor tube (4) and also vibrates at least at times,
-- wherein during operation the first sensor tube (4) and the second sensor tube (5) perform flexural vibrations, at least at times, around an imaginary axis of vibration which is essentially parallel to a longitudinal axis (L) of the measuring sensor, and
-- wherein at least the first sensor tube (4) is designed as a first measuring tube that communicates with the pipe and serves to conduct medium under measurement.
- an electromechanical, particularly an electrodynamic, exciter arrangement (60) which acts on at least one of the sensor tubes (4, 5), said exciter arrangement being designed to generate and/or maintain mechanical vibrations of the at least one sensor tube (4, 5),
- a sensor arrangement, which reacts to movements at least of the first sensor tube (4), particularly flexural vibrations, said sensor arrangement designed to generate at least one vibration measuring signal (S_{vb}) representing vibrations of the first sensor tube (4), as well as
- at least three coupling elements (217a, 217b, 217c) that interconnect the first and second sensor tubes (4, 5) on the inlet side, as well as at least three coupling elements (218a, 218b, 218c) that interconnect the first and second sensor tubes (4, 5) on the outlet side.

2. Sensor as claimed in the previous claim, wherein, during operation, the two sensor tubes (4, 5) essentially vibrate in an out-of-phase manner vis-à-vis one another.

3. Sensor as claimed in one of the previous claims, wherein each of the two sensor tubes (4, 5) has at least partially a curved central pipe segment (41, 51), particularly essentially U-shaped, V-shaped or trapezoidal.

4. Sensor as claimed in Claim 3, wherein the coupling elements (217a, 217b, 217c) on the inlet side and the coupling elements (218a, 218b, 218c) on the outlet side are arranged and fixed on the two sensor tubes (4, 5) in such a way to minimize the clamping forces generated inside the sensor housing by the vibrating sensor tubes (4, 5), said forces primarily acting in the direction of the axis of inertia (H) of the sensor which is essentially perpendicular to the longitudinal axis (L) and is essentially situated on an imaginary central plane of the sensor located between the two curved central pipe segments (41, 51) of the sensor tubes (4, 5).

5. Sensor as claimed in one of the Claims 3 and 4, wherein each of the two sensor tubes (4, 5) has, on the inlet side, a straight inlet pipe segment (42, 52) that is essentially parallel to the imaginary axis of vibration, said inlet pipe segment ending in each case in the central pipe segment (41, 51) via a curved intermediate pipe segment (43, 53) on the inlet side, and wherein each of the two sensor tubes (4, 5) has, on the outlet side, a straight outlet pipe segment (44, 54) that is essentially parallel to the imaginary axis of vibration, said outlet pipe segment ending in each case in the central pipe segment (41, 51) via a curved intermediate pipe segment (45, 55) on the outlet side.

6. Sensor as claimed in Claim 5, wherein at least a first and a second coupling element (217a, 217b) of the coupling elements (217a, 217b, 217c) interconnecting the two sensor tubes (4, 5) on the Inlet side are fixed in each case on the inlet-side intermediate pipe segment (43, 53) of the first and the second sensor tube (4, 5), and wherein at least a first and a second coupling element (218a, 218b) of the coupling elements (218a, 218b, 218c) interconnecting the two sensor tubes (4, 5) on the outlet side are fixed in each case on the outlet-side intermediate pipe segment (45, 55) of the first and the second sensor tube (4, 5).

7. Sensor as claimed in Claim 6, wherein at least a third coupling element (217c) of the coupling elements (217a, 217b, 217c) interconnecting the two sensor tubes (4, 5) on the inlet side is fixed in each case on the inlet pipe segment (42, 52) of the first and the second sensor tube (4, 5), and wherein at least a third coupling element (218c) of the coupling elements (218a, 218b, 218c) interconnecting the two sensor tubes (4, 5) on the outlet side are fixed in each case on the outlet pipe segment (44, 54) of the first and the second sensor tube (4, 5).

8. Sensor as claimed in one of the previous claims, wherein the first sensor tube (4) is essentially parallel to the second sensor tube (5).

9. Sensor as claimed in one of the previous claims, wherein the first sensor tube (4) is designed essentially identically to the second sensor tube (5).

10. Sensor as claimed in one of the previous claims, further comprising a first distribution piece (11) that interconnects the first and second sensor tube (4, 5) on the inlet side, and a second distribution piece (12) that interconnects the first and second sensor tube (4, 5) on the outlet side, wherein the second sensor tube is also designed as a measuring tube of the sensor that communicates with the pipe and serves to conduct medium under measurement.

11. Sensor as claimed in the previous claim, wherein each of the two distribution pieces (11, 12) has a mass of over 10 kg, particularly a mass of over 20 kg.

12. Sensor as claimed in one of the previous claims, wherein the sensor housing (10) has a support element (6), particularly one of steel, to which the at least one sensor tube (4) is mechanically connected on the inlet and outlet side.

13. Sensor as claimed in the previous claim, wherein the support element (6) is designed as a support cylinder, particularly tubular in shape, that is at least partially open at the side, said support cylinder being connected to the at least one sensor tube (4) in such a way that the at least one curved pipe segment (41) projects out of the support cylinder at the side.

14. Sensor as claimed in the previous claim, wherein the support element (6) has a mass of at least 70 kg, particularly a mass of over 140 kg, and/or a length of at least 1000 mm, particularly a length of over 1200 mm.

15. Sensor as claimed in one of the previous claims, wherein each of the sensor tubes (4, 5) and the sensor housing (10) are at least partially made of steel, particularly stainless steel.

16. Sensor as claimed in one of the previous claims, wherein each of the sensor tubes (4, 5) has a mass of at least 10 kg, particularly a mass greater than 25 kg.

17. Sensor as claimed in one of the previous claims, wherein each of the sensor tubes (4, 5) has an inner diameter that is at least 80 mm, particularly an inner diameter greater than 100 mm.

18. Sensor as claimed in one of the previous claims, wherein each of the sensor tubes (4, 5) has a cross-section whose geometrical moment of inertia is greater than 2 • 10⁴ mm³, particularly greater than 4 • 10⁶ mm⁴.

19. Sensor as claimed in one of the previous claims, wherein each of the sensor tubes (4, 5) has a cross-section whose section modulus is greater than 10⁶ mm⁴, particularly greater than 2 • 10⁶ mm⁴.

20. Sensor as claimed in one of the previous claims, wherein each of the sensor tubes (4, 5) has a developed length of at least 1000 mm, particularly greater than 1500 mm.

21. Sensor as claimed in one of the previous Claims 3 to 20, wherein each of the central pipe segments (41, 51) of the two sensor tubes (4, 5) is essentially V-shaped, and wherein each of the central pipe segments of the two sensor tubes (4, 5) has a vertex arc with an opening angle that Is smaller than 150°, particularly smaller than 120°.

22. Sensor as claimed in one of the previous claims, wherein an inner vibration system of the sensor is formed by the two sensor tubes (4, 5), the medium at least currently conducted in the tubes, and at least in part by the exciter and sensor arrangement (60, 70), and wherein when the sensor is in operation the inner vibration system, driven by the exciter arrangement (60), at least temporarily performs mechanical vibrations, particularly lateral vibrations, at a useful vibration frequency (Fₙ) at least, said frequency being dependent on the size, shape and material of the sensor tube (4) and on a current density of the medium, and said frequency being variable, when the sensor is in operation, within a predefined useful frequency range (ΔFₙ) that has a lower and upper limit frequency.

23. Sensor as claimed in Claim 22, wherein a total mass of the inner vibration system is at least 70 kg, and is at least temporarily greater than 90 kg particularly during operation.

24. Sensor as claimed in one of the Claims 10 to 21, wherein an outer vibration system is formed by the sensor housing and at least by the distribution pieces, and an inner vibration system of the sensor is formed by the two sensor tubes (4, 5), the medium at least currently conducted in the tubes, and at least in part by the exciter and sensor arrangement (60, 70), and wherein when the sensor is in operation the inner vibration system, driven by the exciter arrangement (60), at least temporarily performs mechanical vibrations, particularly lateral vibrations, at a useful vibration frequency (Fₙ) at least, said frequency being dependent on the size, shape and material of the sensor tube (4) and on a current density of the medium, and said frequency being variable, when the sensor is in operation, within a predefined useful frequency range (ΔFₙ) that has a lower and upper limit frequency.

25. Sensor as claimed in Claim 24, wherein a total mass of the outer vibration system is at least 200 kg, and In particular is greater than 300 kg.

26. Sensor as claimed in Claim 24 or 25, wherein a mass ratio of a total mass of the outer vibration system to a total mass of the inner vibration system during operation is at least temporarily smaller than 3, particularly smaller than 2.5.

27. Sensor as claimed in the previous claim, wherein the mass ratio of the total mass of the outer vibration system to the total mass of the inner vibration system is permanently smaller than 3.

28. Sensor as claimed in one of the previous claims, wherein an installation-mass-to-nominal-diameter ratio of an installation mass of the entire sensor to a nominal diameter of the sensor, which corresponds to a caliber of the pipe into which the sensor is to be installed, is at least 1.5, and in particular is greater than 2.

29. Sensor as claimed in one of the previous claims, wherein the installation mass of the entire sensor is greater than 200 kg, and in particular is greater than 400 kg.

30. Use of the sensor as claimed in one of the previous claims to measure a mass flow and/or a density and/or a viscosity of a medium, which is capable of flow and is conducted in a pipe which has a caliber greater than 150 mm, particularly a caliber of 250 mm or more, and/or to measure a mass flow of a medium flowing through a pipe, said mass flow being at least temporarily greater than 900 t/h, particularly at least temporarily greater than 1200 t/h.

## Revendications

1. Transmetteur de mesure du type à vibrations destiné à la mesure d'un débit massique et/ou d'une densité et/ou d'une viscosité d'un produit guidé, apte à s'écouler dans une conduite, notamment d'un gaz, d'un liquide, d'une poudre ou d'une autre substance apte à s'écouler, lequel transmetteur de mesure comprend :
- un boîtier de transmetteur (10), lequel est couplé mécaniquement par le biais d'une extrémité côté entrée et une extrémité côté sortie avec la conduite,
- au moins un premier tube de transmetteur (4) supporté de façon à pouvoir vibrer dans le boîtier de transmetteur (10) et vibrant au moins partiellement, et un deuxième tube de transmetteur (5) couplé mécaniquement avec le premier tube de transmetteur (4), également vibrant au moins partiellement,
- le premier tube de transmetteur (4) et le deuxième tube de transmetteur (5) exécutant en fonctionnement au moins partiellement des vibrations de flexion respectivement autour d'un axe longitudinal (L) du transmetteur de mesure dans l'axe de vibrations imaginaire pour l'essentiel parallèle, et
- au moins le premier tube de transmetteur (4) étant conçu en tant que premier tube de mesure servant à guider le produit à mesurer, communiquant avec la conduite.
- un circuit d'excitation (60) électromécanique, notamment électro-dynamique, agissant au moins sur l'un de tubes de transmetteur (4, 5), lequel circuit est destiné à générer et/ou à maintenir les vibrations mécaniques de l'au moins un tube de transmetteur (4, 5),
- un circuit de détection réagissant aux mouvements de l'au moins premier tube de transmetteur (4), notamment des vibrations de flexion, lequel circuit est destiné à générer au moins un signal de mesure de vibrations (S_{vb}) représentant les vibrations du premier tube de transmetteur (4), ainsi que
- au moins trois éléments de couplage (217a, 217b, 217c) reliant entre eux, côté entrée, le premier et le deuxième tube de transmetteur (4, 5), ainsi qu'au moins trois éléments de couplage (218a, 218b, 218c) reliant entre eux, côté sortie, le premier et le deuxième tube de transmetteur (4, 5).

2. Transmetteur de mesure selon la revendication précédente, pour lequel les deux tubes de transmetteur (4, 5) vibrent, en fonctionnement, pour l'essentiel en opposition de phase.

3. Transmetteur de mesure selon l'une des revendications précédentes, pour lequel chacun des deux tubes de transmetteur (4, 5) présente au moins partiellement un segment de tube médian (41, 51) coudé, notamment pour l'essentiel en forme de U, de V ou trapézoïdale.

4. Transmetteur de mesure selon la revendication 3, pour lequel les éléments de couplage (217a, 217b, 217c) côté entrée et les éléments de couplage (218a, 218b, 218c) côté sortie sont disposés et fixés sur les deux tubes de transmetteur (4, 5) de telle manière à minimiser les forces de serrage générées par les tubes de transmetteur (4, 5) vibrant à l'intérieur du boîtier de transmetteur, lesquelles forces agissent pour l'essentiel en direction de chaque axe principal d'inertie (H) du transmetteur de mesure, qui est pour l'essentiel perpendiculaire à l'axe longitudinal (L) et se situe pour l'essentiel dans un plan médian imaginaire du transmetteur de mesure s'étendant entre les deux segments de tube (41, 51) médians coudés.

5. Transmetteur de mesure selon l'une des revendications 3 ou 4, pour lequel chacun des deux tubes de transmetteur (4, 5) présente côté entrée un segment de tube d'entrée (42, 52) droit, pour l'essentiel parallèle à l'axe de vibrations imaginaire, lequel segment débouche par le biais d'un segment de tube intermédiaire (43, 53), en forme d'arc et situé côté entrée, dans le segment de tube médian (41, 51) respectif et pour lequel chacun des deux tubes de transmetteur (4, 5) présente côté sortie un segment de tube de sortie (44, 54) droit, pour l'essentiel parallèle à l'axe de vibrations imaginaire, lequel segment débouche par le biais d'un segment de tube intermédiaire (43, 53), en forme d'arc et situé côté sortie, dans le segment de tube médian (41, 51) respectif.

6. Transmetteur de mesure selon la revendication 5, pour lequel au moins un premier et un deuxième élément de couplage (217a, 217b) parmi les éléments de couplage (217a, 217b, 217c) reliant entre eux les deux tubes de transmetteur (4, 5) côté entrée, sont fixés respectivement au segment de tube intermédiaire (43, 53) côté entrée du premier et du deuxième tube de transmetteur (4, 5) et pour lequel au moins un premier et un deuxième élément de couplage (218a, 218b) parmi les éléments de couplage (218a, 218b, 218c) reliant entre eux les deux tubes de transmetteur (4, 5) côté sortie, sont fixés respectivement au segment de tube intermédiaire (45, 55) côté sortie du premier et du deuxième tube de transmetteur (4, 5)

7. Transmetteur de mesure selon la revendication 6, pour lequel au moins un troisième élément de couplage (217c) parmi les éléments de couplage (217a, 217b, 217c) reliant entre eux les deux tubes de transmetteur (4, 5) côté entrée, est fixé respectivement au segment de tube d'entrée (42, 52) du premier et du deuxième tube de transmetteur (4, 5) et pour lequel au moins un troisième élément de couplage (218c) parmi les éléments de couplage (218a, 218b, 218c) reliant entre eux les deux tubes de transmetteur (4, 5) côté sortie, est fixé respectivement au segment de tube de sortie (44, 54) du premier et du deuxième tube de transmetteur (4, 5).

8. Transmetteur de mesure selon l'une des revendications précédentes, pour lequel le premier tube de transmetteur (4) est pour l'essentiel parallèle au deuxième tube de transmetteur (5).

9. Transmetteur de mesure selon l'une des revendications précédentes, pour lequel le premier tube de transmetteur (4) est pour l'essentiel conçu de façon identique au deuxième tube de transmetteur (5).

10. Transmetteur de mesure selon l'une des revendications précédentes, lequel comprend en outre un premier répartiteur (11) reliant entre eux, côté entrée, le premier et le deuxième tube de transmetteur (4, 5), ainsi qu'un deuxième répartiteur (12) reliant entre eux, côté sortie, le premier et le deuxième tube de transmetteur (4, 5), le deuxième tube de transmetteur étant conçu en tant que deuxième tube de mesure du transmetteur de mesure servant également à guider le produit à mesurer, communiquant également avec la conduite.

11. Transmetteur de mesure selon la revendication précédente, pour lequel chacun de deux répartiteurs (11, 12) présente une masse supérieure à 10 kg, notamment supérieure à 20 kg.

12. Transmetteur de mesure selon l'une des revendications précédentes, pour lequel le boîtier de transmetteur (10) présente un élément support (6) notamment en acier, avec lequel l'au moins un tube de transmetteur (4) est relié mécaniquement côté entrée et côté sortie.

13. Transmetteur de mesure selon la revendication précédente, pour lequel l'élément support (6) est conçu en tant que cylindre support au moins partiellement ouvert latéralement, notamment tubulaire, lequel élément est relié avec l'au moins un tube de transmetteur (4) de telle sorte que l'au moins un segment de tube (41) coudé déborde latéralement du cylindre support.

14. Transmetteur de mesure selon la revendication précédente, pour lequel l'élément support (6) présente une masse d'au moins 70 kg, notamment supérieure à 140 kg, et/ou une longueur d'au moins 1 000 mm, notamment supérieure à 1 200 mm.

15. Transmetteur de mesure selon l'une des revendications précédentes, pour lequel chacun des tubes de transmetteur (4, 5) et le boîtier de transmetteur (10) sont au moins partiellement en acier, notamment en acier inoxydable.

16. Transmetteur de mesure selon l'une des revendications précédentes, pour lequel chacun des tubes de transmetteur (4, 5) présente une masse d'au moins 10 kg, notamment supérieure à 25 kg.

17. Transmetteur de mesure selon l'une des revendications précédentes, pour lequel chacun des tubes de transmetteur (4, 5) présente un diamètre intérieur d'au moins 80 mm, notamment supérieur à 100 mm.

18. Transmetteur de mesure selon l'une des revendications précédentes, pour lequel chacun des tubes de transmetteur (4, 5) présente une section, dont le couple surfacique d'inertie est supérieur à 2 • 10⁴ mm³, notamment supérieur à 4 • 10⁶ mm⁴.

19. Transmetteur de mesure selon l'une des revendications précédentes, pour lequel chacun des tubes de transmetteur (4, 5) présente une section, dont le couple résistant à la flexion est supérieur à 10⁶ mm⁴, notamment supérieur à 2 • 10⁶ mm⁴.

20. Transmetteur de mesure selon l'une des revendications précédentes, pour lequel chacun des tubes de transmetteur (4, 5) présente une longueur développée s'élevant à au moins 1 000 mm, notamment supérieure à 1 500 mm.

21. Transmetteur de mesure selon l'une des revendications 3 à 20, pour lequel chacun des segments de tube médians (41, 51) et pour lequel chacun des tubes de transmetteur (4, 5) est conçu pour l'essentiel en forme de V et pour lequel chacun des deux segments de tube médians des deux tubes de transmetteur (4, 5) présente un arc de crête avec un angle d'ouverture inférieur à 150°, notamment inférieur à 120°.

22. Transmetteur de mesure selon l'une des revendications précédentes, pour lequel est formé un système de vibrations intérieur du transmetteur de mesure à travers les deux tubes de transmetteur (4, 5), le produit au moins guidé momentanément à l'intérieur des tubes, ainsi qu'à travers les circuits d'excitation et de détection (60, 70), et pour lequel le système de vibrations intérieur, entraîné par le circuit d'excitation (60), exécute pendant le fonctionnement du transmetteur de mesure au moins temporairement, des vibrations mécaniques notamment en tant que vibrations latérales, à au moins une fréquence de vibrations utile (Fₙ), laquelle dépend à la fois de la taille, de la forme et du matériau du tube de transmetteur (4), ainsi que de la densité momentanée du produit, et laquelle fréquence est variable pendant le fonctionnement du transmetteur de mesure à l'intérieur de la bande de fréquence utile (ΔFₙ) prédéfinie, présentant une fréquence limite inférieure et supérieure.

23. Transmetteur de mesure selon la revendication 22, pour lequel une masse totale du système de vibrations intérieur s'élève à au moins 70 kg, est notamment supérieure, en fonctionnement, au moins temporairement à 90 kg.

24. Transmetteur de mesure selon l'une des revendications 10 à 21, pour lequel est formé un système de vibrations extérieur du transmetteur de mesure à travers le bottier de transmetteur et au moins à travers les répartiteurs, ainsi qu'un système de vibrations intérieur du transmetteur de mesure à travers les deux tubes de transmetteur (4, 5), le produit guidé momentanément à l'intérieur des tubes ainsi qu'au moins partiellement à travers le circuit d'excitation et le circuit de détection (60, 70), et pour lequel le système de vibrations intérieur, entraîné par le circuit d'excitation (60), exécute pendant le fonctionnement du transmetteur de mesure au moins temporairement, des vibrations mécaniques notamment en tant que vibrations latérales, à au moins une fréquence de vibrations utile (Fₙ), laquelle dépend à la fois de la taille, de la forme et du matériau du tube de transmetteur (4), ainsi que de la densité momentanée du produit, et laquelle fréquence est variable pendant le fonctionnement du transmetteur de mesure à l'intérieur de la bande de fréquence utile (ΔFₙ) prédéfinie présentant une fréquence limite inférieure et supérieure.

25. Transmetteur de mesure selon la revendication 24, pour lequel une masse totale du système de vibrations extérieur s'élève à au moins 200 kg, est notamment supérieure à 300 kg.

26. Transmetteur de mesure selon la revendication 24 ou 25, pour lequel un rapport de masse d'une masse totale du système de vibrations extérieur par rapport à une masse totale du système de vibrations intérieur est, en fonctionnement, au moins temporairement inférieur à 3, notamment à 2,5.

27. Transmetteur de mesure selon la revendication précédente, pour lequel le rapport de masse de la masse totale du système de vibrations extérieur par rapport à la masse totale du système de vibrations intérieur est en permanence inférieur à 3.

28. Transmetteur de mesure selon l'une des revendications précédentes, pour lequel un rapport masse de montage / diamètre nominal d'une masse de montage du transmetteur de mesure complet par rapport à un diamètre nominal du transmetteur de mesure, qui correspond à un calibre de la conduite, qui doit être introduite dans l'écoulement du transmetteur de mesure, est égal à au moins 1,5, notamment supérieur à 2.

29. Transmetteur de mesure selon l'une des revendications précédentes, pour lequel la masse de montage du transmetteur de mesure complet est supérieure à 200 kg, notamment supérieure à 400 kg.

30. Utilisation du transmetteur de mesure selon l'une des revendications précédentes pour la mesure d'un débit massique et/ou d'une densité et/ou d'une viscosité d'un produit apte à s'écouler, lequel est guidé dans une conduite présentant un calibre supérieur à 150 mm, notamment à 250 mm, et/ou pour la mesure d'un débit massique d'un produit s'écoulant à travers une conduite, lequel débit est au moins temporairement supérieur à 900 t/h, notamment au moins temporairement à 1 200 t/h.
